# EUROPEAN PATENT SPECIFICATION

(11) **EP 2 739 021 B1**
(45) Date of publication and mention of the grant of the patent: **13.02.2019**
(21) Application number: 13195333.3
(22) Date of filing: 02.12.2013
(51) Int. Cl.: H04M 1/725, G06F 3/0481, G06F 3/0488

(54) **Mobile terminal and information handling method for the same**
Mobiles Endgerät und Informationshandhabungsverfahren dafür
Terminal mobile et son procédé de contrôle d'informations

(30) Priority: 03.12.2012 KR 20120139182
(43) Date of publication of application: 04.06.2014
(73) Proprietor: Samsung Electronics Co., Ltd., Gyeonggi-do 443-742 (KR)
(72) Inventor: Lee, Geunho, Suwon-si Gyeonggi-do 443-742 (KR); Woo, Richard Sukyoon, Suwon-si Gyeonggi-do 443-742 (KR); Lee, Sanghyup, Suwon-si Gyeonggi-do 443-742 (KR)
(74) Representative: Nederlandsch Octrooibureau

(56) References cited:
- EP-A1- 1 650 937
- US-B1- 6 868 283

## Description

### TECHNICAL FIELD

The present disclosure relates to information output of a mobile terminal. More particularly, the present disclosure relates to an information handling method and a mobile terminal supporting the same wherein specific information generated during operation is provided in a more intuitive and easily processable manner.

### BACKGROUND

Mobile terminals supporting communication have entered into widespread use due to their small size which enables ease of portability. Recently, increased touch screen sizes, advanced hardware and software support and diversified digital content have dramatically accelerated popularization of mobile terminals.

Such a mobile terminal may include various communication modules to provide communication services. For example, a mobile terminal may include a mobile communication module to support at least one of a voice call service, a messaging service, or a data service. With advances in data services, a mobile terminal may receive and play a variety of content from different data servers. Thanks to performance enhancement, mobile terminals can now execute a variety of functions at the same time (multitasking). For example, a mobile terminal may perform a gallery search function while playing music files. In particular, when an event occurs, a mobile terminal may output a message or notification regarding the event. For example, in response to reception of a call, the mobile terminal may output a call handling screen on a display unit. In such a case, when the mobile terminal transitions to the call handling screen without considering the current function being executed, the current function may be interrupted. Further, when the current function being interrupted is very important to the user, such unconditional screen transition may cause a great inconvenience to the user. Accordingly, there is a need for an apparatus and method for handling information wherein specific information generated during operation is provided in a more intuitive and easily processable manner.

EP 1 650 937 A1 discloses a mobile terminal providing user notifications in a way to minimise the user's distraction from a current application.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below. Accordingly, an aspect of the present disclosure is to provide a mobile terminal and information handling method for the same wherein specific information is output in a user friendly manner so that various selection opportunities for terminal manipulation are provided to the user while maintaining continuity of task processing.

In accordance with an aspect of the present disclosure, a method for information handling in a mobile terminal is provided according to claim 1.

In accordance with another aspect of the present disclosure, a mobile terminal supporting information handling is provided according to claim 8.

In a feature of the present disclosure, the information handling method enables a mobile terminal to provide function information generated during operation in a user-friendly manner. Hence, the user may recognize function information in an intuitive and easy manner.

In addition, the information handling method forces a mobile terminal to maintain continuity of user tasks and provides the user with various selection opportunities for handling output information, enabling active control of the scope of output information.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a block diagram of a mobile terminal supporting information handling according to an embodiment of the present disclosure;
FIG. 2 illustrates a configuration of a control unit, such as the control unit in the mobile terminal of FIG. 1, according to an embodiment of the present disclosure;
FIG. 3 is a flowchart of an information handling method according to an embodiment of the present disclosure;
FIG. 4 illustrates screen representations of information handling according to a first embodiment of the present disclosure;
FIG. 5 is a flowchart of a procedure for information handling according to the first embodiment of the present disclosure;
FIG. 6 illustrates screen representations of information handling according to a second embodiment of the present disclosure;
FIG. 7 illustrates additional screen representations of information handling according to the second embodiment of the present disclosure;
FIG. 8 is a flowchart of a procedure for information handling according to the second embodiment of the present disclosure;
FIG. 9 illustrates screen representations of information handling according to a third embodiment of the present disclosure;
FIG. 10 is a flowchart of a procedure for information handling according to the third embodiment of the present disclosure;
FIG. 11 illustrates screen representations of information handling according to a fourth embodiment of the present disclosure;
FIG. 12 illustrates additional screen representations of information handling according to the fourth embodiment of the present disclosure;
FIG. 13 is a flowchart of a procedure for information handling according to the fourth embodiment of the present disclosure;
FIG. 14 illustrates screen representations of information handling according to a fifth embodiment of the present disclosure;
FIG. 15 is a flowchart of a procedure for information handling according to the fifth embodiment of the present disclosure;
FIG. 16 illustrates screen representations of information handling according to a sixth embodiment of the present disclosure;
FIG. 17 is a flowchart of a procedure for information handling according to the sixth embodiment of the present disclosure;
FIG. 18 illustrates screen representations of information handling according to a seventh embodiment of the present disclosure; and
FIG. 19 is a flowchart of a procedure for information handling according to the seventh embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope of the present disclosure. In addition, descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

An information handling method of the present disclosure will be described below in terms of a multitasking environment. However, the information handling method may be applied not only to outputting, while a first application function is executed, function information indicating activation of a second application function, but also to outputting function information in a state where a particular application function is not executed (for example, an idle screen, menu screen, or menu icon is displayed). The information handling method of the present disclosure may be applied to various appliances having a display unit to output function information, such as a portable electronic device, a tablet computer, a personal computer, a laptop computer, a smart TV, or the like. Such an appliance may support multitasking.

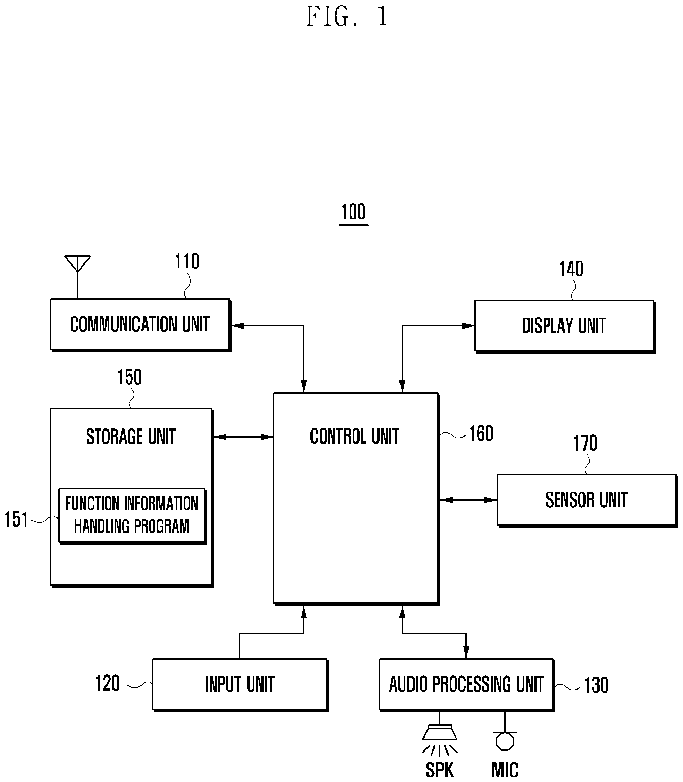

FIG. 1 is a block diagram of a mobile terminal supporting information handling in a multitasking environment according to an embodiment of the present disclosure.

Referring to FIG. 1, the mobile terminal 100 may include a communication unit 110, an input unit 120, an audio processing unit 130, a display unit 140, a storage unit 150, a sensor unit 170, and a control unit 160.

In the mobile terminal 100 having the above configuration, in a state in which a first application is activated, specific function information of the mobile terminal 100, which is generated during software or hardware operation in relation to a second application of the mobile terminal 100, may be output on a first application screen on the display unit 140. Here, the function information may be overlaid on the first application screen while the first application screen is kept on the display unit 140. In another embodiment, the first application screen may be resized to arrange a space on the display unit 140 and the function information may be output in the arranged space. For example, as part of providing function information, the mobile terminal 100 may output function notification information (indicating the type or contents of the function information) and function handling information (applicable to the function information) in separate regions. The function handling information may be represented as an object such as an icon, an image, text, or the like. Upon selection of the object, a command for execution of a pre-assigned function is sent to the control unit 160.

In addition, the mobile terminal 100 may further display function handling guide information describing terminal manipulation options for function handling on the display unit 140. The function handling guide information may include at least one of information represented as at least one object including text, an image or an icon that guides a function handling option based on a button key or touch gesture, information guiding a function handling option based on a motion, proximity, a light change, or the like using the sensor unit 170, or information guiding a function handling option based on speech recognition. Hence, the user may handle a specific function according to guide information of the mobile terminal 100 by at least one of pressing a button key, performing a touch gesture on the display unit 140 supporting touch input, performing a terminal manipulation action, generating voice input, or the like. For example, the display unit 140 may include a touch screen. The function information may be related to various events such as reception of a call, reception of a text, e-mail or instant message, schedule notification, alarm clock ringing, application update, terminal system update, and the like.

To support the above functions, the communication unit 110 is configured to support communication of the mobile terminal 100. The communication unit 110 enables the mobile terminal 100 to send and receive voice or video calls, messages and data. To this end, the communication unit 110 may establish a communication channel to a base station and support such communication functions using the communication channel. The communication unit 110 may include one or more communication modules supporting distinct communication schemes. The communication unit 110 may receive a call connection request from an external mobile terminal and forward the same to the control unit 160. The communication unit 110 may receive a text, e-mail or instant message from an external mobile terminal and forward the same to the control unit 160. The communication unit 110 may connect to a specified server device according to scheduling information and receive information such as messages from the server device. For example, function information generated by operation of the communication unit 110 may be output through the display unit 140 and other output means such as a vibration module or the audio processing unit 130. In a multitasking environment where a specific application is executed, function information generated by operation of the communication unit 110 may be output in a region of the display unit 140 under control of the control unit 160. Thereafter, when function handling information related to communication channel utilization is selected by the user (such as call acceptance), the communication unit 110 performs corresponding communication channel operation.

The input unit 120 is configured to generate various input signals for manipulation of the mobile terminal 100. The input unit 120 may be composed of a home key, one or more side keys, and a keypad. When the display unit 140 is designed to support touch capabilities as a touch screen or touch panel, the display unit 140 may act as an input means on the basis of a virtual touchpad output on the display unit 140. The input unit 120 may be designed to include a stylus pen, an electromagnetic induction pen, or the like. The input unit 120 may generate an input signal for selection and activation of one of various applications provided by the mobile terminal 100, and may generate an input signal for handling a function corresponding to function information generated during execution of the selected application. The generated input signal may be sent to the control unit 160 and be used as a command for execution of a corresponding function. Handling of function information of the present disclosure using various keys such as the home and side keys of the input unit 120 will be described in more detail later with reference to the drawings.

The audio processing unit 130 includes a speaker to output various audio data in the course of operating the mobile terminal 100. When the mobile terminal 100 supports call or recording functions, the audio processing unit 130 may include a microphone to collect audio data. When output of function information is requested in a multitasking environment, the audio processing unit 130 may output a sound notification or sound effect corresponding to the function information according to user settings. For example, in a state in which an audio signal of a first application is output, when output of function information related to a second application is requested, the audio processing unit 130 may pause audio signal output for the first application and support at least one of collection or output of an audio signal of the second application. Here, the audio processing unit 130 may pause or continue audio signal output according to types of the first application and the second application. For example, when function information is related to a messaging function (second application), the audio processing unit 130 may continue audio signal output of the first application. In the event that function information is related to a call function (second application), the audio processing unit 130 may pause audio signal output of the first application when a call connection request is issued, and then resume audio signal output for the first application when the call function is terminated.

The audio processing unit 130 may collect a voice signal for selection of function handling information in function information. Here, the audio processing unit 130 may perform speech recognition by default or according to user settings and may provide a notification indicating availability of speech recognition for selection of function handling information. The audio processing unit 130 applies speech recognition to a voice signal collected by the microphone and sends speech recognition results to the control unit 160 for function handling.

The display unit 140 may output various screens related to usage of the mobile terminal 100. For example, the display unit 140 may output an application screen for an application activated according to a user request. When output of function information is requested during display of the application screen, the display unit 140 may output the function information on a portion of the screen. To support input in addition to display, the display unit 140 may be configured to include a touch panel and a display panel, and may set effective regions on the touch panel according to various virtual key maps output on the display panel. As described before, function information output on the display unit 140 may include at least one of function notification information, function handling information, function handling guide information, and the like and may be output as a partial overlay on an application screen of an application being executed or output at a region allocated separately from the application screen. Output and handling of function information are described in more detail later with reference to the drawings.

The storage unit 150 may store a variety of programs needed for operation of the mobile terminal 100, programs realizing various functions supported by the mobile terminal 100, data needed for program execution, data generated by program execution, and the like. The storage unit 150 may store data related to applications and icon information for application selection. In particular, the storage unit 150 may store a function information handling program 151.

The function information handling program 151 supports output of function information, which is generated during operation of the mobile terminal 100, on the display unit 140. For example, the function information handling program 151 may include a routine for checking generation of function information, a routine for outputting function information on the display unit 140 in a multitasking environment, a routine for receiving an input signal for handling function information output on the display unit 140, and a routine for handling a function according to a received input signal.

Here, the routine for outputting function information may include a routine for determining a region in which at least a portion of function information is to be output according to a user application manipulation, a routine for outputting at least a portion of function information as a partial overlay on a screen of an application being executed, a routine for resizing the application screen and outputting at least a portion of function information in a region distinct from the resized application screen, and the like. The routine for outputting function information may further include a routine for outputting function information in one or more representations according to a user setting.

The routine for receiving an input signal for handling output function information is a routine to receive a signal for selection of function handling information among function information output by the output routine, and may receive at least one of a touch event for icon selection, a touch gesture, a key event for button selection, a motion event according to representation of the function handling information, or the like. To this end, the routine for receiving an input signal may supply power to an input means such as the touch panel, sensor unit 170 and input unit 120 according to function handling information and receive an input event from the input means.

The sensor unit 170 includes various sensors to collect information on a motion or a state of the mobile terminal 100. For example, the sensor unit 170 may include an acceleration sensor, a geomagnetic sensor, a pressure sensor, an altitude sensor, a location information collection sensor, an image capture sensor, and the like. Using these sensors, the sensor unit 170 may collect sensing signals for a motion or a state (e.g., tilt, rotation, etc.) of the mobile terminal 100 and send the sensing signals to the control unit 160. The sensor unit 170 may be activated when a certain motion or gesture event for activation of the information handling function of the present disclosure is detected, when output of function information is requested in a state in which the information handling function is activated, when an input event for handling an additional function is requested in a state in which a function is being processed according to selection of function handling information, or the like. Activation of the sensor unit 170 is described in more detail later in conjunction with the following embodiments.

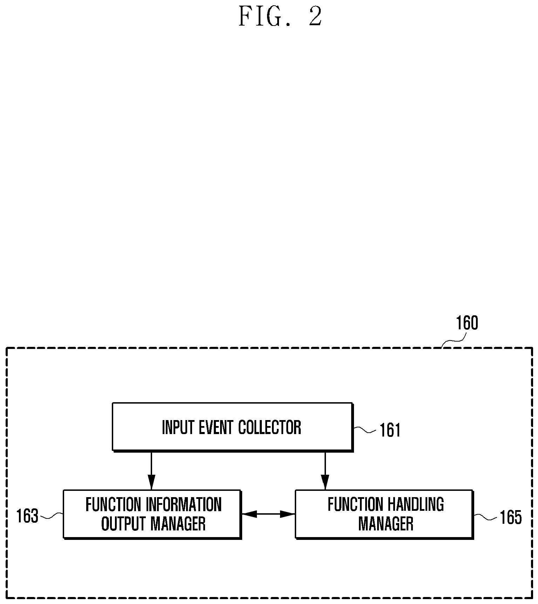

The control unit 160 may control signal flows for operation of the mobile terminal 100 and perform processing, distribution, storage and management of data, and the like. In particular, to support the information handling function of the present disclosure, the control unit 160 may have a configuration shown in FIG. 2.

FIG. 2 illustrates a configuration of a control unit, such as the mobile terminal of FIG. 1, according to an embodiment of the present disclosure.

Referring to FIG. 2, the control unit 160 may include an input event collector 161, a function information output manager 163, and a function handling manager 165.

The input event collector 161 receives various input signals or input events from the input unit 120, the display unit 140 acting as an input means, the sensor unit 170, and the audio processing unit 130 supporting input based on speech recognition. The input event collector 161 may collect and process an input event for activating the information handling function of the present disclosure. To this end, the mobile terminal 100 may provide a mode selection menu or a mode selection icon for the information handling function. When activation of the information handling function is selected, the input event collector 161 notifies the function information output manager 163 of the same. After output of function information is requested in a state in which the information handling function is activated, the input event collector 161 collects an input event related to function handling information. For example, the input event collector 161 may collect a touch event related to selection of function handling information, and collect at least one of a button key selection event, a touch gesture, a motion event, a speech recognition event, or the like, corresponding to an input event generated according to function handling guide information. When an interested input event is collected, the input event collector 161 may forward the input event to the function handling manager 165. Additionally, the input event collector 161 may collect a new input event during handling of one function and forward the new input event to the function handling manager 165. Separately from this, in a multitasking environment where a particular application is executed, the input event collector 161 may collect an input event related to the application and forward the input event to the function handling manager 165.

The function information output manager 163 is configured to output function information on the display unit 140. The function information output manager 163 may output various types of function information according to functions to be handled. For example, when a call is received, the function information output manager 163 may output function notification information to notify reception of a call and output function handling information to handle the received call. In addition, the function information output manager 163 may output function handling guide information to present terminal manipulation options for handling the received call. When specific function handling information is selected, the function information output manager 163 may output additional function handling information needed for processing of the selected function handling information on the display unit 140.

When function information output is requested, the function information output manager 163 may collect information regarding a manipulation state of the mobile terminal 100 for a certain time immediately before function information output and adjust at least one of the output position and representation of the function information according to the manipulation state information. For example, to output function handling information on a touch basis, the function information output manager 163 may output function handling information in a region of the display unit 140 where no touch event has been collected for a certain time. This may also be applied to output of additional function handling information. The function information output manager 163 may output function notification information serving as function handling information according to settings for function information output.

The function handling manager 165 is configured to perform a function corresponding to an input event that is received from the input event collector 161 to select function handling information from function information. The function handling manager 165 may perform an additional function corresponding to a new input event collected in relation to output of new function handling information in succession to processing of the previous function. For example, in the case of an incoming call, the function information output manager 163 outputs function handling information on the display unit 140. When the user selects function handling information indicating call connection, the function handling manager 165 may perform a terminal manipulation operation for call connection by activating the communication unit 110 to establish a communication channel. In succession, the function information output manager 163 may output additional function handling information indicating, for example, call termination on the display unit 140. When the user selects the additional function handling information indicating call termination, the function handling manager 165 may perform a terminal manipulation operation to terminate the call.

For function information related to message reception, in response to selection of function handling information indicating message viewing, the function handling manager 165 may perform at least one of screen resizing, transparency adjustment, overlay generation, and the like on the display unit 140 to display the received message. Thereafter, upon selection of additional function handling information indicating reply message composition, the function handling manager 165 may control the display unit 140 to output a message composition screen including a virtual touchpad. Here, when an application is already being executed, the function handling manager 165 may overlay the message composition screen on a region of the application screen related to the application in execution or output the message composition screen in a region allocated after screen splitting. When the reply message is completed, the function handling manager 165 may transmit the reply message and restore the application screen on the display unit 140.

As described above, the mobile terminal 100 supporting the information handling function of the present disclosure outputs, when a request for a function is made during operation, function information in an adaptive manner without a screen transition from the current screen or application screen of an application currently being executed, thereby maintaining continuity of task processing. In addition, the mobile terminal 100 arranges function information so that the function information is readily and intuitively understandable for ease of use. Hence, the user may handle function information without confusion in relation to manipulation of the mobile terminal 100.

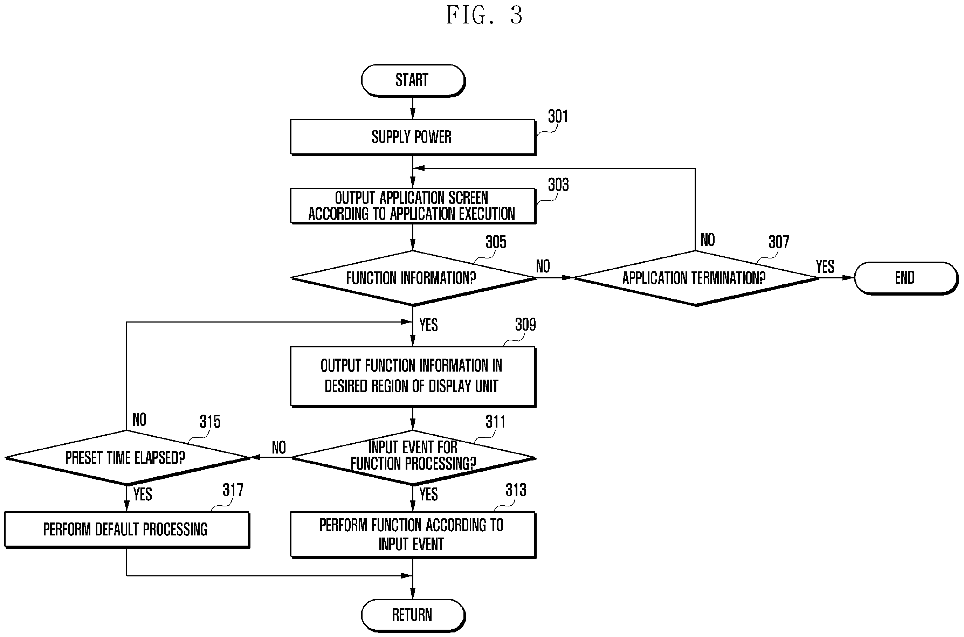

FIG. 3 is a flowchart of an information handling method according to an embodiment of the present disclosure.

Referring to FIG. 3, at operation 301, the control unit 160 of the mobile terminal 100 supplies power from a power source to the individual components of the mobile terminal 100 for proper operation. At operation 303, upon execution of an application, the control unit 160 outputs an application screen for the executed application. Thereafter, at operation 305, the control unit 160 determines whether a request for function information output is issued. If a request for function information output is not issued, the control unit 160 proceeds to operation 307 at which the control unit 160 determines whether an input event for application termination is generated. If an input event for application termination is not generated, the control unit 160 returns to operation 303 to continue application execution. Here, the application may implement a function providing an idle screen, a menu screen, menu icons, or the like. The application may also implement at least one of functions related to gaming, access to servers, scheduling, messaging, camera manipulation, broadcast reception, video playback, file editing, and the like.

If a request for function information output is issued at operation 305 (for example, reception of a call, reception of a message or alarm clock ringing requiring execution of a different application, etc.), the control unit 160 proceeds to operation 309 at which the control unit 160 outputs function information in a region of the display unit 140. Here, the control unit 160 may output function information in at least two different regions. For example, the control unit 160 may output function notification information in a readily noticeable region (for example, an upper region or central region on the screen). More specifically, the control unit 160 may select a region unrelated to manipulation of the application being executed (e.g., a region where no touch event has been collected for a preset time immediately before issuance of the function information output request, or a region where display state changes infrequently in relation to the application being executed), and output function notification information as an overlay on the selected region of the application screen. Alternatively, the control unit 160 may resize the application screen to arrange a region separate from the application screen and output function notification information in the newly arranged region.

The control unit 160 outputs function handling information in a region separate from the region in which function notification information is output. For example, when function notification information is scheduled to be output in an upper region on the display unit 140, the control unit 160 may output function handling information in a central region or a lower central region for easier selection and manipulation. In particular, the control unit 160 may output function handling information in a lower region on the screen so that the user may easily select the function handling information while gripping the mobile terminal 100. Here, similarly to the case of function notification information, the control unit 160 may output function handling information as an overlay on a region of the current application screen, or may arrange a separate region and output function handling information in the newly arranged region.

During function information output, the control unit 160 may output function handling guide information corresponding to descriptions of use of button keys, touch events, motion events, and the like. Function handling information may be represented as at least one of text or images, and may be output as a sound notification according to settings.

Thereafter, at operation 311, the control unit 160 determines whether an input event for function processing (for example, a touch event for selection of function handling information, a button key selection, a motion event, a speech recognition event for processing a function, etc.) is received. If an input event for function processing is received, the control unit 160 proceeds to operation 313 at which the control unit 160 performs a function according to the input event.

If an input event for function processing is not received at operation 311, the control unit 160 proceeds to operation 315 at which the control unit 160 determines whether a preset time duration has elapsed. If the preset time duration has elapsed, the control unit 160 proceeds to operation 317 at which the control unit 160 performs default processing. For example, the control unit 160 may ignore generated function information. If the preset time duration has not elapsed, the control unit 160 returns to operation 309 and continues function information output. In an embodiment of the present disclosure, the preset time duration may be preset by a manufacturer or set by a user.

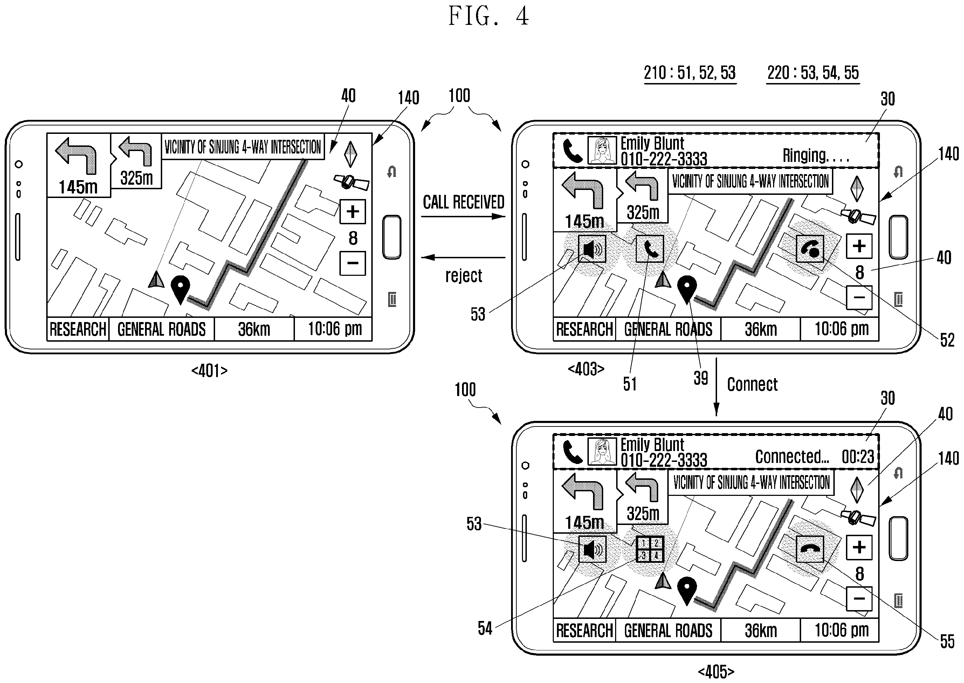

FIG. 4 illustrates screen representations of information handling according to a first embodiment of the present disclosure.

Referring to FIG. 4, in the first embodiment, the mobile terminal 100 supporting the information handling function of the present disclosure may activate and execute a navigation application in response to a user request for a navigation function. Accordingly, the display unit 140 outputs a navigation function screen 40 as indicated by indicia 401.

During execution of the navigation operation, the control unit 160 may perform a communication function (for example, receive a call) through the communication unit 110. In that case, when a call is received, the control unit 160 may output function notification information 30 and function handling information 210 on the display unit 140 as indicated by indicia 403. Here, the function notification information 30 includes a call reception notification indicating reception of a call. The function handling information 210 and additional function handling information 220 include pieces of information for handling a received call.

The function notification information 30 includes information on an application related to function information. For example, the function notification information 30 may include information related to call reception. Specifically, the function notification information 30 may include counterpart identification information such as a phone number or a username of an external mobile terminal, phonebook information related to a counterpart user such as a photograph, status of function information handling, and the like.

The function handling information 210 is used to handle functions of an application related to function information. For example, as indicated by indicia 403, the function handling information 210 may include first function handling information 51 for call connection, second function handling information 52 for call rejection, and third function handling information 53 for speaker mode. When the user generates a touch event for selecting the first function handling information 51, the control unit 160 may perform call connection processing and output additional function handling information 220 as indicated by indicia 405. Here, the additional function handling information 220 includes fourth function handling information 54 invoking a virtual touchpad to enter digits and characters and fifth function handling information 55 for call termination, and may further include the third function handling information 53 for speaker mode. The third function handling information 53 may be included in the function handling information 210 or in the additional function handling information 220 according to the status of function processing.

When the second function handling information 52 for call rejection is selected in a state indicated by indicia 403, the control unit 160 may perform call rejection processing and return to the state indicated by indicia 401. When no input event for selecting the function handling information 210 is generated for a preset time, the control unit 160 may perform the same function processing as in the case of selecting the second function handling information 52 as default processing.

As indicated by indicia 403 and 405, the function handling information 210 and additional function handling information 220 may be output with a suitable transparency on the display unit 140 so as not to interrupt the navigation function. In addition, the control unit 160 may output the function handling information 210 and additional function handling information 220 in regions not overlapping with a direction indicator 39 serving as a core feature of the navigation function.

To display function notification information 30, as indicated by indicia 403 and 405, the control unit 160 may resize the navigation function screen 40 to arrange a region and output the function notification information 30 in the newly arranged region. The function notification information 30 may include different descriptions according to the status of function processing. For example, the function notification information 30 indicated by indicia 403 includes "Ringing" to indicate call reception, and the function notification information 30 indicated by indicia 405 includes "Connected" to indicate call acceptance.

As described above, the mobile terminal 100 of the present disclosure, in a state in which an application screen for a navigation function is provided, may output function information for call handling in response to reception of a call, wherein the function information is separately output as function notification information 30 and function handling information 210. Hence, the user may readily recognize generation of function information and easily perform function processing correspondingly. In addition, the mobile terminal 100 may sustain the screen output of the application currently being executed during function processing, thereby maintaining continuity of task processing.

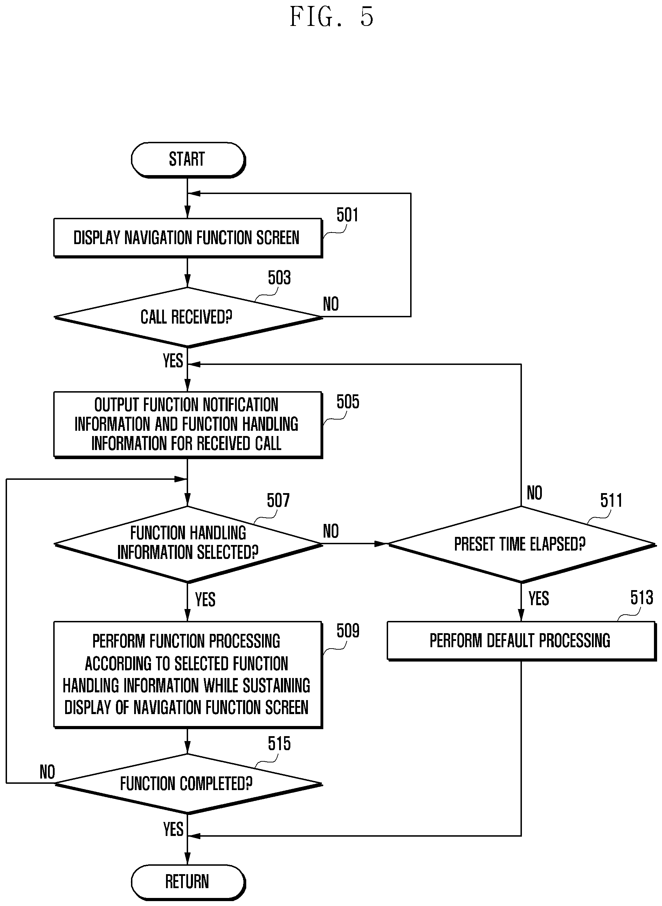

FIG. 5 is a flowchart of a procedure for information handling according to the first embodiment of the present disclosure. In the following description, a navigation function screen is used as the current application screen. However, the present disclosure is not limited thereto. That is, various screens supported by the mobile terminal 100, such as a navigation function screen, a game function screen, a menu icon screen, a camera function screen, a file playback screen, a file editing screen, a gallery function screen, a broadcast reception screen, a schedule function screen, a memo or note writing screen, a web access screen, idle screen, and the like may be used as the current application screen.

Referring to FIG. 5, at operation 501, in response to a user request or preset schedule information, the control unit 160 of the mobile terminal 100 activates a navigation function and outputs a navigation function screen 40 on the display unit 140. Thereafter, at operation 503, the control unit 160 determines whether a call is received. If a call is not received, the control unit 160 returns to operation 501 and continues display of the navigation function screen 40.

If a call is received at operation 503, the control unit 160 proceeds to operation 505 at which the control unit 160 outputs function notification information 30 and function handling information 210 for the received call on the display unit 140. Here, the control unit 160 may sustain the navigation function screen 40 on the display unit 140 for the navigation function currently being executed. Hence, the control unit 160 may output the function notification information 30 and function handling information 210 for the received call as a partial overlay on the navigation function screen 40, or may resize the navigation function screen 40 to arrange a region and output the function notification information 30 in the newly arranged region. For example, the control unit 160 may output the function notification information 30 in an upper region of the display unit 140 and output the function handling information 210 between edge regions of the display unit 140 in an opposite direction of the region where the function notification information 30 is output. For easier selection of the function handling information 210, the control unit 160 may output the function handling information 210 near to a lower edge region of the display unit 140. Alternatively, the control unit 160 may resize the navigation function screen 40 to arrange a space on an upper region of the display unit 140 and output the function notification information 30 in the newly arranged space, and output the function handling information 210 as a partial overlay on the resized navigation function screen 40. In the above description, the function notification information 30 is depicted as being output in an upper region of the display unit 140. However, the function notification information 30 may also be output in a lower, left or right region of the screen. When the function notification information 30 is output in a left or right region of the screen, it may be displayed in a direction parallel or perpendicular to the left or right side of the screen.

Thereafter, at operation 507, the control unit 160 determines whether a touch event for selection of function handling information is generated. If the function handling information is selected, the control unit 160 proceeds to operation 509 at which the control unit 160 performs function processing according to the selected function handling information while sustaining the navigation function screen 40. For example, the control unit 160 may perform call connection or call rejection. When the call is connected, the control unit 160 may output the audio in a receiver mode or in a speaker mode. In the receiver mode, the user may use a receiver placed near the ear to play the audio at a preset volume level.

In the speaker mode, the audio is played at a higher volume level compared with the receiver mode so that the user may converse without placing the mobile terminal 100 near to the ear. The receiver mode and the speaker mode may be realized using separate audio output devices such as a receiver and speaker, or may be realized using one audio output device with volume adjustment. Thereafter, at operation 515, the control unit 160 determines whether function processing is completed. If function processing is not completed, the control unit 160 returns to operation 509. If function processing is completed, the control unit 160 returns to operation 501 to continue display of the navigation function screen 40 on the display unit 140. In addition, when an input event for navigation function termination is generated, the control unit 160 ends the navigation function and may transition to a screen such as an idle screen or to a state such as a sleep state. In an embodiment, the screen and state, such as the idle screen and sleep state, may be preset by a manufacturer, or selected by a user.

If the function handling information is not selected at operation 507, the control unit 160 proceeds to operation 511 at which the control unit 160 determines whether a preset time has elapsed. When the preset time has not elapsed, the control unit 160 returns to operation 505. When the preset time has elapsed, the control unit 160 proceeds to operation 513 at which the control unit 160 performs default processing. Here, default processing may differ according to user settings or design settings. For example, when the preset time has elapsed, the control unit 160 may automatically reject the received call and record the received call as a missed call in the call log. The control unit 160 may automatically reject the received call and send a rejection message to an external mobile terminal having placed the call. In contrast, when the preset time has elapsed, the control unit 160 may automatically establish a channel for call connection by default. Upon completion of default processing, the control unit 160 returns to operation 501 and may perform subsequent operations.

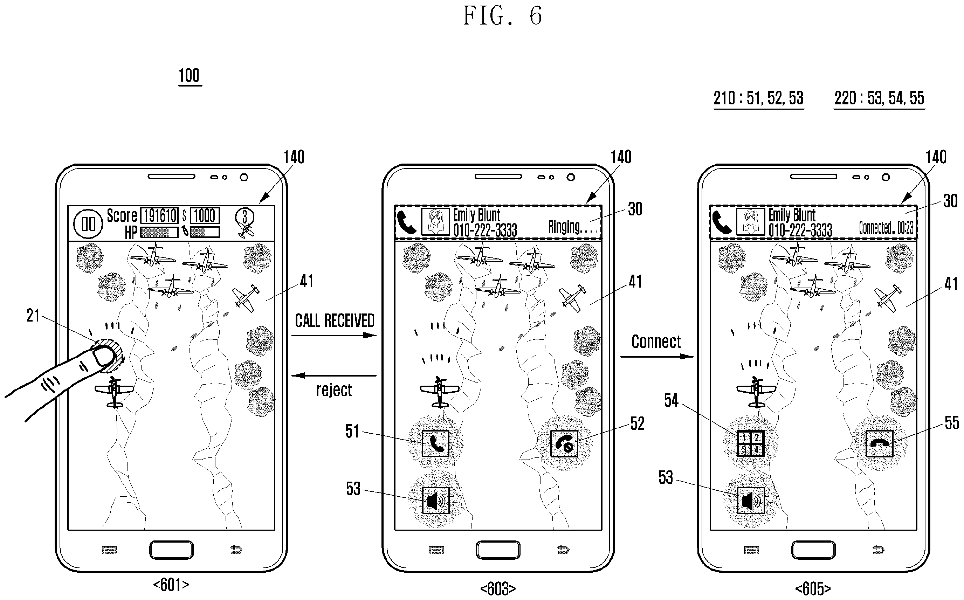

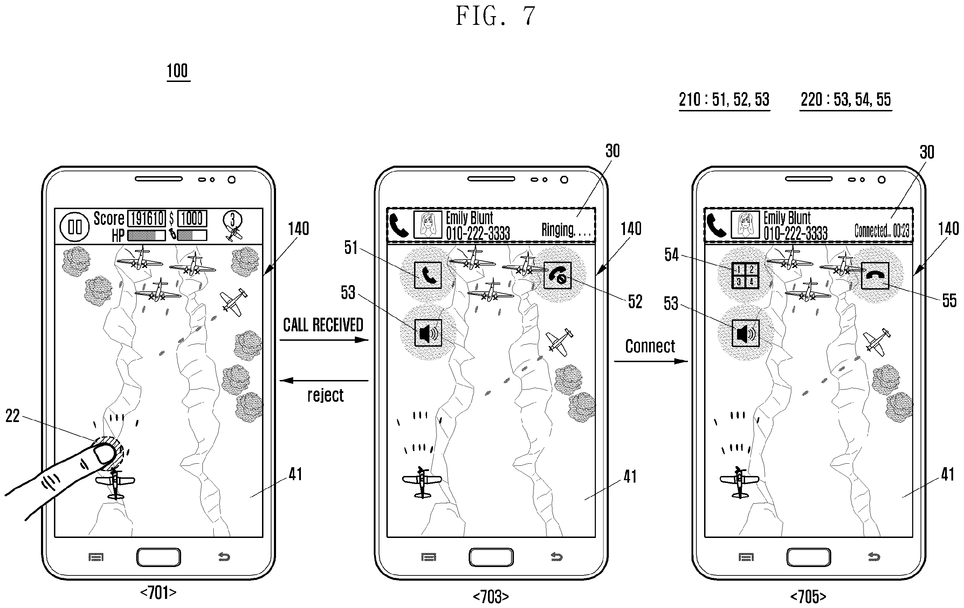

FIGS. 6 and 7 are screen representations illustrating information handling according to a second embodiment of the present disclosure.

Referring to FIG. 6, in the second embodiment, the mobile terminal 100 supporting the information handling function of the present disclosure may activate a game application in response to a user request for a game function and output a game function screen 41 on the display unit 140 as indicated by indicia 601. After output of the game function screen 41 on the display unit 140, the control unit 160 may activate a touch feature to receive input events for game playing. The user may generate a first touch event 21 for game playing on the display unit 140 supporting touch interaction. The first touch event 21 and position information thereof may be sent to the control unit 160. The control unit 160 may apply the received first touch event 21 to the game function and update the game function screen 41 accordingly.

When a call is received, the control unit 160 may output function notification information 30 and function handling information 210 on the display unit 140 as indicated by indicia 603. The display unit 140 may output the function notification information 30 at an upper portion of the screen so that the function notification information 30 overlaps the game function screen 41. Before output of the function handling information 210, the control unit 160 may identify position information of the first touch event 21 having occurred immediately before reception of the call and output the function handling information 210 in regions not overlapping with the position of the first touch event 21 as indicated by indicia 603. Accordingly, although function handling information 210 related to reception of a call is output on the display unit 140, the control unit 160 may minimize interruption of game playing due to output of the function handling information 210. The user may recognize reception of a call and determine how to handle the call while continuously generating touch events for game playing. For example, when first function handling information 51 for call connection is selected, the display unit 140 may output function notification information 30 indicating a call connected state and the game function screen 41 as indicated by indicia 605. The display unit 140 may further output pieces of additional function handling information 220 in relation to call connection. When second function handling information 52 for call rejection is selected in a state indicated by indicia 603, the control unit 160 may return to the screen state indicated by indicia 601.

The situation depicted in FIG. 7 is similar to that of FIG. 6 but differs in terms of the position where the function handling information 210 is output. That is, when a second touch event 22 is generated at a lower portion of the screen as indicated by indicia 701, the control unit 160 may output function handling information 210 according to reception of a call at a position separated a given distance from the position where the second touch event 22 is generated as indicated by indicia 703. The control unit 160 may also output additional function handling information 220 at a position separated by a given distance from the position of the second touch event 22. Thereby, the control unit 160 may prevent touch event generation for selection of the function handling information 210 or the additional function handling information 220 from interfering with touch event generation for game playing.

To use information on touch events generated immediately before reception of a call, the control unit 160 may continuously track touch events and identify regions not overlapping with the touch points for a preset time immediately before reception of a call. In the above description, function handling information 210 is depicted as being output in an upper or lower region of the screen. However, the present disclosure is not limited thereto. That is, first to fifth function handling information 51, 52, 53, 54 and 55 may be output in dispersed regions not overlapping with such touch points on the display unit 140. For example, the first function handling information 51 may be output at an upper right corner of the screen and the second function handling information 52 may be output at a lower right corner of the screen.

The output position of function handling information 210 may be flexibly changed according to generation of touch events. For example, when the path of a continuous touch event such as a touch drag or flick overlaps with the region in which the function handling information 210 is output on the game function screen 41, the control unit 160 may change the output position of the function handling information 210. When touch-down is made on the region in which the function handling information 210 is output, the control unit 160 may recognize this as selection of the function handling information 210 and perform function processing correspondingly.

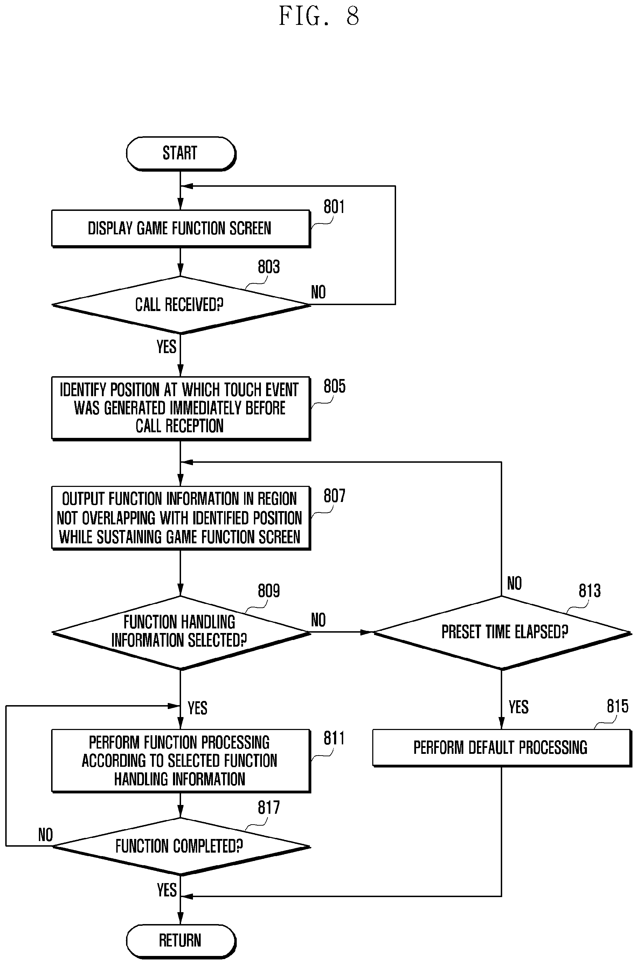

FIG. 8 is a flowchart of a procedure for information handling according to the second embodiment of the present disclosure.

Referring to FIG. 8, at operation 801, in response to a user request for a game function, the control unit 160 activates a game application and outputs a game function screen 41 on the display unit 140. Thereafter, at operation 803, the control unit 160 determines whether a call is received. If a call is not received, the control unit 160 returns to operation 801 and continues display of the game function screen 41.

If a call is received at operation 803, the control unit 160 proceeds to operation 805 at which the control unit 160 identifies the position at which a touch event was generated immediately before reception of the call. To this end, the control unit 160 may continuously track touch points. At operation 807, the control unit 160 outputs function information in at least one region not overlapping with the identified position while sustaining the game function screen 41. That is, the control unit 160 may output at least one of function notification information 30 or function handling information 210 at a position where a touch event was not generated for a thresholdtime or immediately before call reception.

Thereafter, at operation 809, the control unit 160 determines whether a touch event for selection of function handling information is generated. If the function handling information is not selected, the control unit 160 proceeds to operation 813 at which the control unit 160 determines whether a preset time has elapsed. When the preset time has not elapsed, the control unit 160 returns to operation 807 and continues output of the function notification information 30 and function handling information 210. When the preset time has elapsed, the control unit 160 proceeds to operation 815 at which the control unit 160 performs default processing. Default processing may be performed in the same manner as described before.

If the function handling information is selected at operation 809, the control unit 160 proceeds to operation 811 at which the control unit 160 performs function processing according to the selected function handling information. Thereafter, at operation 817, the control unit 160 determines whether function processing is completed. If function processing is not completed, the control unit 160 returns to operation 811. If function processing is completed, the control unit 160 returns to operation 801 and continues display of the game function screen 41 on the display unit 140.

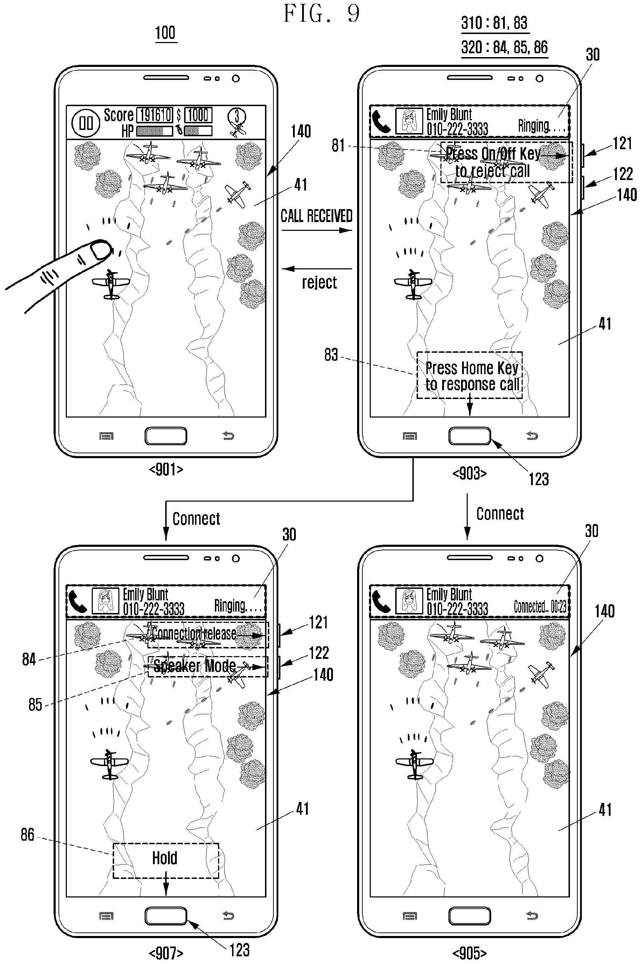

FIG. 9 illustrates screen representations of information handling according to a third embodiment of the present disclosure.

Referring to FIG. 9, in response to a user request for a game function, the mobile terminal 100 supporting the information handling function of the present disclosure may activate a game application and output a game function screen 41 as indicated by indicia 901. The user may manipulate the display unit 140 supporting a touch feature to generate touch events for game play. The control unit 160 may place the communication unit 110 in a wait state to permit reception of a call during game play. When a call is received, the control unit 160 outputs function notification information 30 and function handling guide information 310 on the display unit 140 displaying the game function screen 41 as indicated by indicia 903. Here, the function notification information 30 may be the same as that described before. The function handling guide information 310 guides utilization of button keys of the input unit 120 to perform function processing. For example, as indicated by indicia 903, side keys 121 and 122 may be formed at the right side of the mobile terminal 100 and a Home key 123 may be formed at a portion of the front side. For function processing due to reception of a call, the control unit 160 may output first guide information 81 on the display unit 140 to indicate function processing to be performed when the first side key 121 is selected. Here, the control unit 160 may output the first guide information 81 in a region of the display unit 140 physically corresponding to the first side key 121. Similarly, the control unit 160 may output second guide information 83 in a region of the display unit 140 physically corresponding to the Home key 123.

Through the first and second guide information 81 and 83, the user may identify the button key to be selected to handle the received call in a desired manner. When the user generates an input signal for selection of the Home key 123 indicated by the second guide information 83, the control unit 160 may perform call connection establishment and mark a corresponding status indication in the function notification information 30 as indicated by indicia 905. When the user selects the first side key 121 indicated by the first guide information 81, the control unit 160 may perform call rejection and return to a state indicated by indicia 901.

During call connection, for further function processing due to call connection, the control unit 160 may output additional function handling guide information 320 on the display unit 140 as indicated by indicia 907. As an illustration of additional function handling guide information 320, the control unit 160 may display third guide information 84 to indicate a function newly assigned to the first side key 121, display fourth guide information 85 to indicate a function assigned to the second side key 122, and display fifth guide information 86 to indicate a function newly assigned to the Home key 123. During the call, the user may use the side keys 121 and 122 and the Home key 123 to cause the mobile terminal 100 to perform additional function processing indicated by the guide information. For example, when the first side key 121 is selected, the control unit 160 may terminate the call; when the second side key 122 is pressed, the control unit 160 may switch from a receiver mode to a speaker mode; and when the Home key 123 is selected, the control unit 160 may place the call on hold. Here, when the call is currently in the speaker mode, the fourth guide information 85 associated with the second side key 122 may be changed so as to indicate switching to the receiver mode. The control unit 160 may output the function handling guide information 310 and the additional function handling guide information 320 as a partial overlay on the game function screen 41. Here, the control unit 160 may output such guide information in a semi-transparent format so as not to severely disrupt game play. In addition, touch events detected on pieces of guide information may be not regarded as interaction for function processing due to call reception. That is, the control unit 160 may treat a touch event detected on a piece of guide information as an input event for game play on the game function screen 41.

Individual keys including the side keys 121 and 122 and Home key 123 may be mapped with different call handling functions or different additional call handling functions according to the number of key presses or the key press duration. Even when a given key is mapped to multiple functions, the control unit 160 may display guide information on key press options and corresponding functions. For example, in a state indicated by indicia 903, instead of the first guide information 81 and second guide information 83, as function handling guide information, sixth guide information may be displayed in association with the Home key 123. Here, the sixth guide information may be text information such as "Press 1 time to answer call, Press 2 times to reject call". In this case, when the Home key 123 is pressed one time for a preset time, the control unit 160 may establish call connection as indicated by indicia 905; and when the Home key 123 is pressed two times for the preset time, the control unit 160 may reject the call and return to the state indicated by indicia 901. In addition, functions mapped with the same key may be distinguished by the key press duration. For example, different functions mapped with the same key may be distinguished by a short key press and a long key press, and guide information thereon may be displayed on the screen.

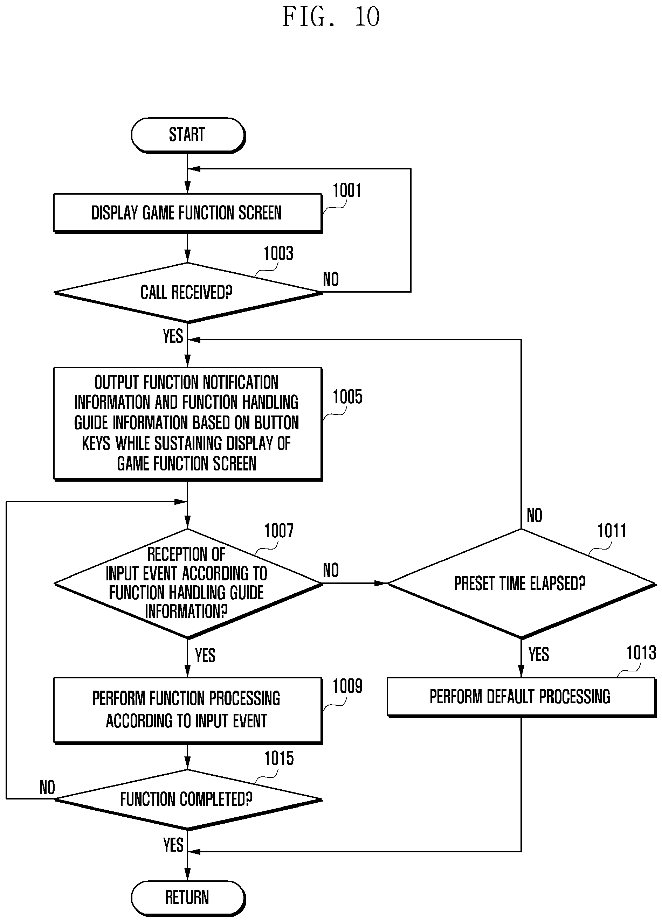

FIG. 10 is a flowchart of a procedure for information handling according to the third embodiment of the present disclosure.

Referring to FIG. 10, in the third embodiment, at operation 1001, the control unit 160 activates a game application in response to a user request for a game function and outputs a game function screen 41 on the display unit 140. Thereafter, at operation 1003, the control unit 160 determines whether a call is received. If a call is not received, the control unit 160 returns to operation 1001. If a call is received at operation 1003, the control unit 160 proceeds to operation 1005 at which the control unit 160 outputs function notification information 30 and function handling guide information 310 based on button keys while sustaining display of the game function screen 41. Thereafter, at operation 1007, the control unit 160 determines whether an input event is received in relation to the function handling guide information 310. If an input event is received in relation to the function handling guide information 310, the control unit 160 proceeds to operation 1009 at which the control unit 160 performs function processing according to the input event, for example, call connection or call rejection.

If an input event is not received in relation to the function handling guide information 310 at operation 1007, the control unit 160 proceeds to operation 1011 at which the control unit 160 determines whether a preset time has elapsed. When the preset time has not elapsed, the control unit 160 returns to operation 1005 and continues display of the function handling guide information 310. Here, when a touch event is generated on the display unit 140 having a touch feature, the control unit 160 may perform a gaming operation according to the touch event.

When the threshold time has elapsed without reception of an input event at operation 1011, the control unit 160 proceeds to operation 1013 at which the control unit 160 performs default processing set in advance. Default processing may be performed in substantially the same way as described before.

After operation 1009, at operation 1015, the control unit 160 determines whether function processing is completed. If function processing is not completed, the control unit 160 returns to operation 1009. If function processing is completed, the control unit 160 returns to operation 1001 and continues display of the game function screen 41.

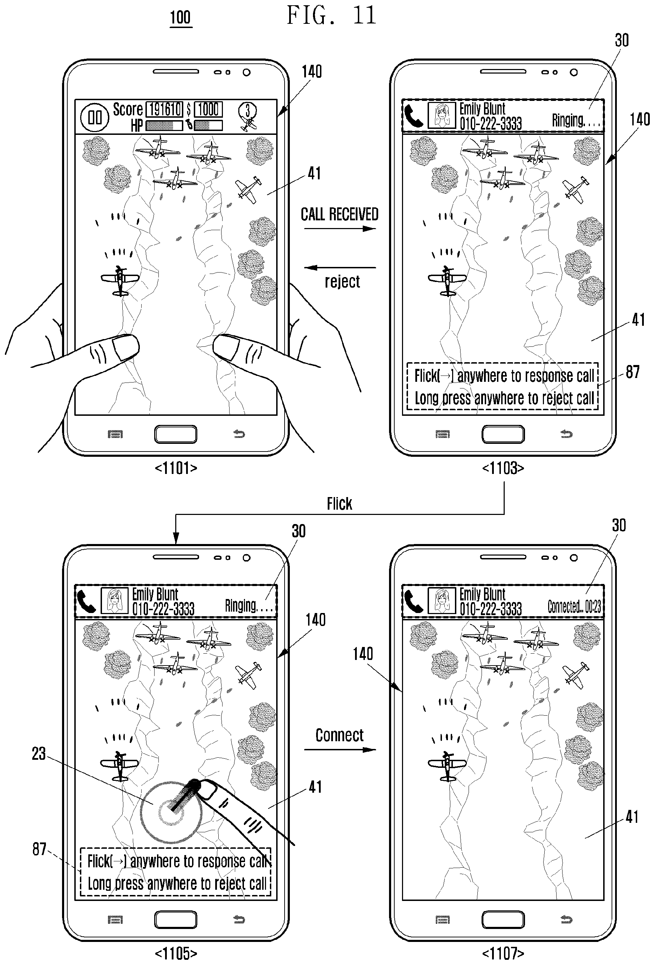

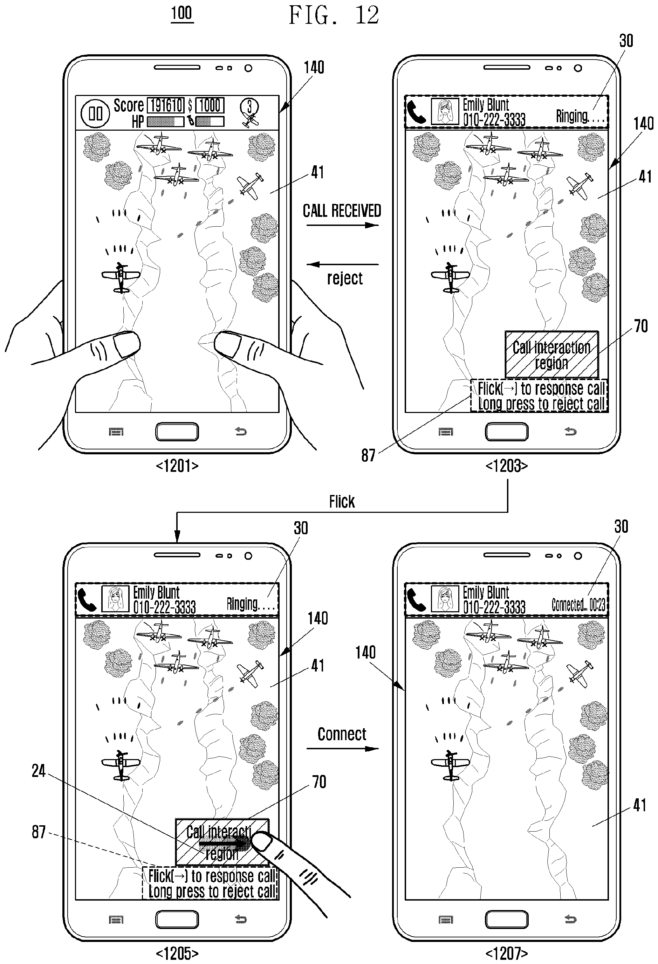

FIGS. 11 and 12 are screen representations illustrating information handling according to a fourth embodiment of the present disclosure.

Referring to FIG. 11, in response to a user request for a game function, the control unit 160 of the mobile terminal 100 supporting the information handling function of the present disclosure may activate a game application and output a game function screen 41 on the display unit 140 as indicated by indicia 1101. Here, according to a gaming scheme, the control unit 160 may activate the sensor unit 170, receive a motion event detected by the sensor unit 170 and apply the motion event to game play. For example, the sensor unit 170 having detected a tilt motion event from the mobile terminal 100 may forward the tilt motion event to the control unit 160, which may then change the position of a user character or avatar on the game function screen 41 according to the tilt motion event.

When a call is received, the control unit 160 outputs function notification information 30 and function handling guide information 87 based on touch gestures at designated portions on the display unit 140 as indicated by indicia 1103. Here, the function handling guide information 87 may guide generation of a preset touch gesture using the touch feature of the display unit 140. The user may refer to the function handling guide information 87 to perform a preset touch gesture on the display unit 140 for call handling. For example, the user may perform a touch gesture 23 at a portion of the display unit 140 as indicated by indicia 1105.

Then, the control unit 160 may identify the touch gesture 23 and perform function processing according to the touch gesture 23. For example, when the user generates a flick gesture at a portion of the display unit 140 according to the function handling guide information 87, the control unit 160 may perform call connection establishment as indicated by indicia 1107. In contrast, when the user generates a long press gesture at a portion of the display unit 140 according to the function handling guide information 87, the control unit 160 may perform call rejection and return to a state indicated by indicia 1101. In the above description, flick and long press are used as examples of touch gestures. However, various other touch gestures such as double tap, 'C' or 'O'-shaped gestures, multi-touches, and the like may also be used for function processing.

Alternatively, referring to FIG. 12, the mobile terminal 100 may set a region for touch event generation in advance and notify the region. That is, when a call is received in a state in which the game function screen 41 is output as indicated by indicia 1201, the control unit 160 may output function notification information 30 and function handling guide information 87 based on touch gestures on the display unit 140 as indicated by indicia 1203. In addition, the control unit 160 sets an interaction region 70 for a touch gesture on the display unit 140. The user may make a desired touch gesture 24 in the interaction region 70 with reference to the contents of the function handling guide information 87 as indicated by indicia 1205. Upon reception of the touch gesture 24 in the interaction region 70, the control unit 160 may perform function processing according to the touch gesture 24. For example, if a flick gesture is generated in the interaction region 70, the control unit 160 may perform call connection establishment as indicated by indicia 1207. If a long press gesture is generated in the interaction region 70, the control unit 160 may perform call rejection and return to a state indicated by indicia 1201.

The interaction region 70 may be set at a fixed position or at an adaptively determined position according to game play. That is, the control unit 160 may set the interaction region 70 at a position where a touch event for game play is not generated. For example, the control unit 160 may identify a position where a touch event was not generated for a preset time or immediately before call reception, and set the interaction region 70 at such a position.

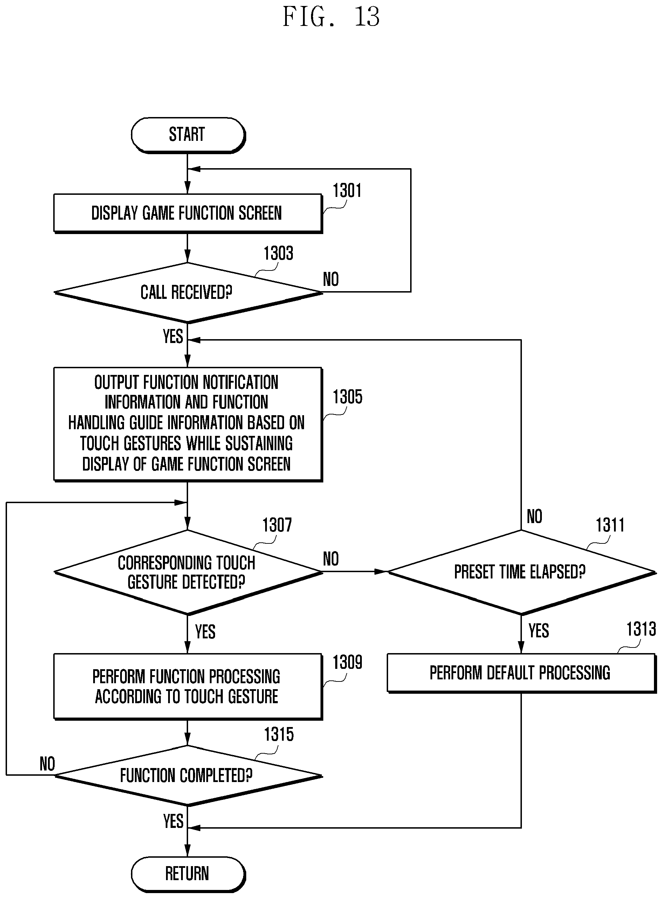

FIG. 13 is a flowchart of a procedure for information handling according to the fourth embodiment of the present disclosure.

Referring to FIG. 13, at operation 1301, the control unit 160 activates a game application in response to a user request for a game function and outputs a game function screen 41 on the display unit 140. Thereafter, at operation 1303, the control unit 160 determines whether a call is received. If a call is not received, the control unit 160 returns to operation 1301.

If a call is received at operation 1303, the control unit 160 proceeds to operation 1305 at which the control unit 160 outputs function notification information 30 and function handling guide information 87 based on touch gestures on the display unit 140 while sustaining display of the game function screen 41. Here, the control unit 160 may output the function notification information 30 as a partial overlay on the game function screen 41 or may resize the game function screen 41 to arrange a region and output the function notification information 30 in the newly arranged region. The control unit 160 may output the function handling guide information 87 based on touch gestures as a partial overlay on the game function screen 41. Additionally, the control unit 160 may set and mark an interaction region 70 for generation of a call handling touch gesture on the display unit 140.

Thereafter, at operation 1307, the control unit 160 determines whether a touch gesture is received as indicated by the function handling guide information 87. If a touch gesture is received as indicated, the control unit 160 proceeds to operation 1309 at which the control unit 160 performs function processing according to the touch gesture. For example, the control unit 160 may perform call connection or call rejection according to the touch gesture. If a touch gesture is not received at operation 1307, the control unit 160 proceeds to operation 1311 at which the control unit 160 determines whether a preset time has elapsed. When the preset time has not elapsed, the control unit 160 returns to operation 1305. When the preset time has elapsed, the control unit 160 proceeds to operation 1313 at which the control unit 160 performs default processing. Here, the preset time may be a wait time during which a call request signal is received from another mobile terminal. Upon expiration of the wait time, the control unit 160 may record reception of a call from another mobile terminal in the call log and continue game play. Call log information indicating call reception may be displayed for a given time on the display unit 140 and removed thereafter. Accordingly, function information of the present disclosure may be output during the wait time. During output of the call log information, the control unit 160 may output additional function handling information, which may be needed for call placement to an external mobile terminal corresponding to the call log information, on the game function screen 41. Accordingly, after the wait time, the user may place a call to the external mobile terminal while the game function screen 41 is output.

The preset time or wait time may be adjusted according to user settings. For example, the user may set the wait time to 10 seconds for a given function so that, when the function is activated, a ringtone indicating reception of a call is played for 10 seconds only and the call is automatically rejected after 10 seconds. Hence, the user may adaptively respond to an incoming call according to relative importance between the function and call.

At operation 1315, the control unit 160 determines whether function processing due to the touch gesture is completed. If function processing is not completed, the control unit 160 returns to operation 1309. If function processing is completed, the control unit 160 returns to operation 1301 and continues display of the game function screen 41.

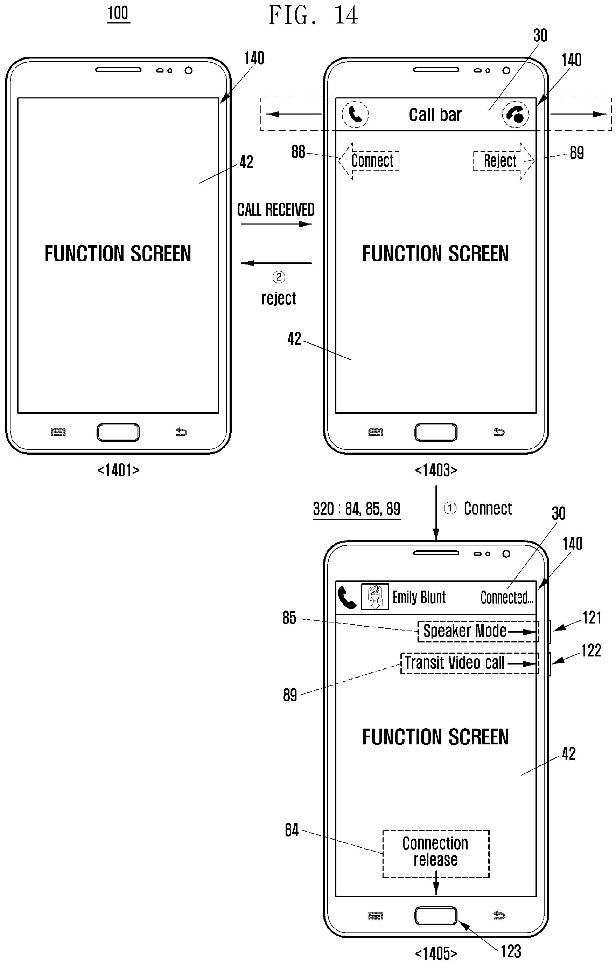

FIG. 14 illustrates screen representations of information handling according to a fifth embodiment of the present disclosure.

Referring to FIG. 14, in response to a user request for an application, the control unit 160 of the mobile terminal 100 supporting the information handling function of the present disclosure may activate the requested application and output an application function screen 42 on the display unit 140 as indicated by indicia 1401. When a call is received in a state in which the application function screen 42 is output, the control unit 160 may output function notification information 30 permitting function processing at a portion of the display unit 140 as indicated by indicia 1403. In addition, according to user or design settings, the control unit 160 may output function handling information 88 and 89 describing usage of the function notification information 30. The function handling information 88 and 89 may be not output according to a user selection or settings. As indicated by indicia 1403, the function notification information 30 may include images depicting call handling options.

When the user selects the function notification information 30 and makes a drag or flick gesture in a direction indicated by the function handling information 88 or 89, the control unit 160 may perform a corresponding function. That is, when the user makes a touch gesture of selecting the function notification information 30 and moving in the left direction as indicated by the function handling information 88, the control unit 160 may perform call connection establishment as indicated by indicia 1405. When the user makes a touch gesture of selecting the function notification information 30 and moving in the right direction as indicated by the function handling information 89, the control unit 160 may perform call rejection and return to a state indicated by indicia 1401.

In a state indicated by indicia 1405, after call connection, the control unit 160 outputs additional function handling guide information 84, 85 and 89. That is, the control unit 160 may output additional function handling guide information 330 on the display unit 140. Here, the additional function handling guide information 84, 85 and 89 may be information guiding the use of button keys. For example, the additional function handling guide information 85 includes a notification that selection of the first side key 121 causes a transition to the speaker mode; the additional function handling guide information 89 includes a notification that selection of the second side key 122 causes switching to a video call; and the additional function handling guide information 84 includes a notification that selection of the Home key 123 causes call termination.

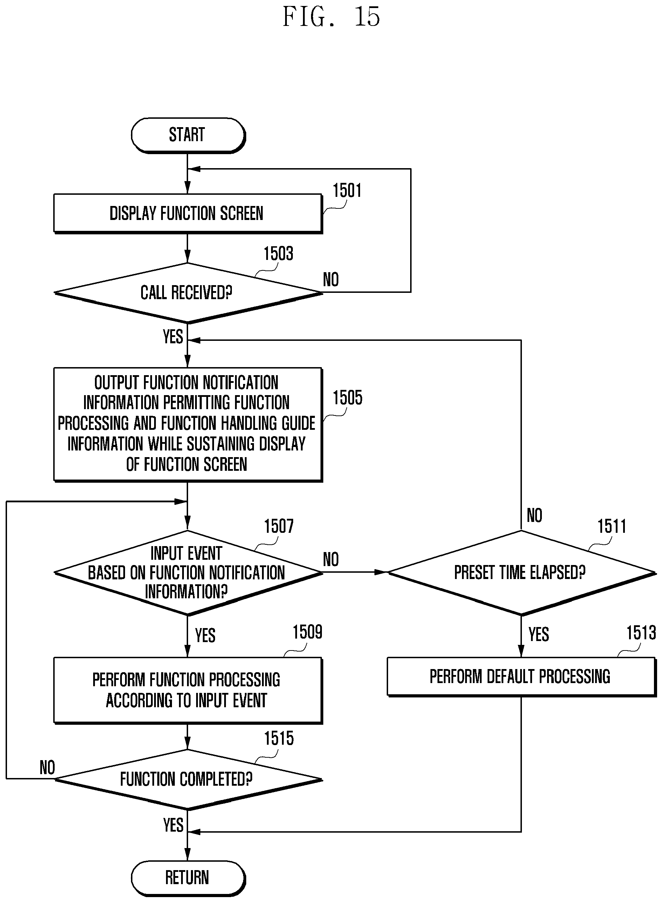

FIG. 15 is a flowchart of a procedure for information handling according to the fifth embodiment of the present disclosure.

Referring to FIG. 15, at operation 1501, in response to a user request for an application, the control unit 160 of the mobile terminal 100 supporting the information handling function of the present disclosure activates the requested application and outputs an application function screen 42 on the display unit 140. Thereafter, at operation 1503, the control unit 160 determines whether a call is received. If a call is not received, the control unit 160 returns to operation 1501. If a call is received at operation 1503, the control unit 160 proceeds to operation 1505 at which the control unit 160 outputs function notification information 30 permitting function processing and function handling guide information 88 and 89 based on the function notification information on the display unit 140 while sustaining display of the application function screen 42. Here, the function handling guide information 88 and 89 may be output so as to overlap with the function notification information 30. In this case, the function handling guide information 88 and 89 may be semi-transparent so that the function notification information 30 may be viewed.

Thereafter, at operation 1507, the control unit 160 determines whether an input event on the function notification information 30 is received (for example, a touch gesture moving in a given direction on the function notification information 30). If such an input event is received, the control unit 160 proceeds to operation 1509 at which the control unit 160 performs function processing such as call connection or call rejection according to the input event.

If such an input event is not received at operation 1507, the control unit 160 proceeds to operation 1511 at which the control unit 160 determines whether a preset time has elapsed. When the preset time has not elapsed, the control unit 160 returns to operation 1505. When the preset time has elapsed, the control unit 160 proceeds to operation 1513 at which the control unit 160 performs default processing. Default processing may be performed in the same way as described before. After operation 1509, at operation 1515, the control unit 160 determines whether function processing is completed. If function processing is not completed, the control unit 160 returns to operation 1509 and continues function processing. If function processing is completed, the control unit 160 returns to operation 1501 and continues display of the application function screen 42.

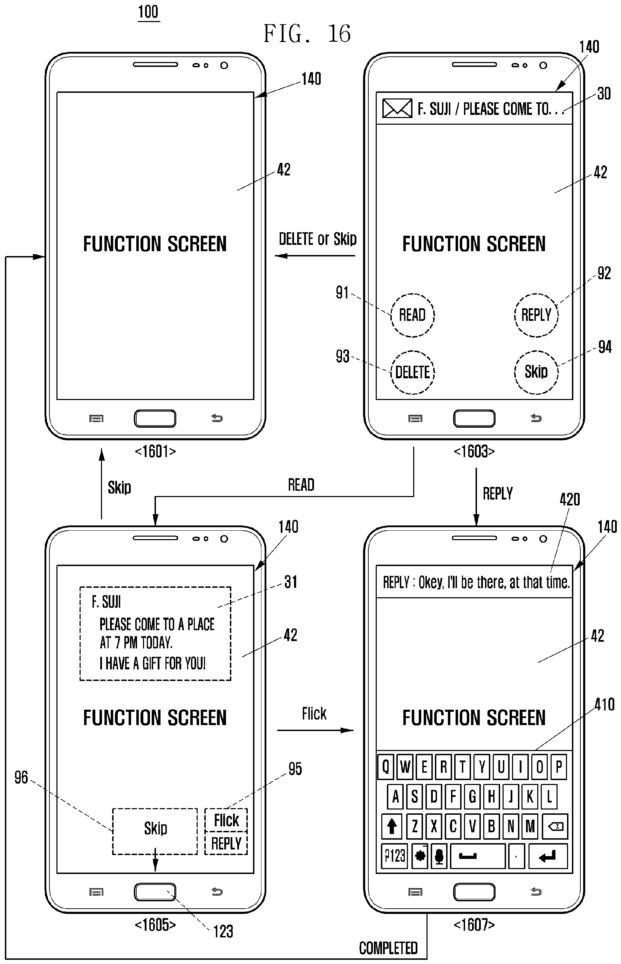

FIG. 16 illustrates screen representations of information handling according to a sixth embodiment of the present disclosure.

Referring to FIG. 16, in response to a user request for an application, the control unit 160 of the mobile terminal 100 may activate the requested application and output an application function screen 42 on the display unit 140 as indicated by indicia 1601. Thereafter, when a message is received, the control unit 160 may output function notification information 30 for message reception and output pieces of function handling information 91, 92, 93 and 94 for message handling at portions of the display unit 140 as indicated by indicia 1603. Here, the control unit 160 may output the function notification information 30 and the function handling information 91, 92, 93 and 94 as an overlay on the application function screen 42. Alternatively, the control unit 160 may output the function notification information 30 in a region separated from the application function screen 42 and output the function handling information 91, 92, 93 and 94 as an overlay on the application function screen 42. Here, the received message may be a text message, instant message, email or the like.

In a state indicated by indicia 1603, when function handling information 93 "Delete" or function handling information 94 "Skip" is selected, the control unit 160 may perform a corresponding function and return to the state indicated by indicia 1601. For example, if function handling information 93 "Delete" is selected, the control unit 160 may immediately remove the received message. If function handling information 94 "Skip" is selected, the control unit 160 may save the received message in a preset location, remove the function notification information and function handling information from the screen, and return to the state indicated by indicia 1601.

In a state indicated by indicia 1603, if function handling information 91 "Read" is selected, the control unit 160 may display the received message as detailed function notification information 31 on the display unit 140 as indicated by indicia 1605. Here, the control unit 160 may translucently output the detailed function notification information 31 so as not to disrupt utilization of the application function screen 42. With output of the detailed function notification information 31, the control unit 160 may output function handling guide information 96 based on a button key and function handling guide information 95 based on a touch gesture on the display unit 140. When a button key or touch gesture associated with function handling guide information is entered, the control unit 160 may perform a function indicated by the function handling guide information. For example, if the Home key 123 is entered, the control unit 160 may return to the state indicated by indicia 1601. If a touch gesture corresponding to "Reply" is entered, for composition of a reply message, the control unit 160 may output a composition region 410 and a body region 420 on the application function screen 42 as indicated by indicia 1607. Here, the body region 420 may be output so as to replace the function notification information 30 or detailed function notification information 31, and the composition region 410 may be translucently output at a portion of the display unit 140. The composition region 410 may be output at a region where no touch event has been collected for a preset time before message reception. To this end, the composition region 410 may be divided into two or more parts each having a number of virtual keys, which are separately displayed on the application function screen 42. After the reply message is composed and sent in a state indicated by indicia 1607, the control unit 160 may return to the state indicated by indicia 1601 and continue display of the application function screen 42 for requested function processing.

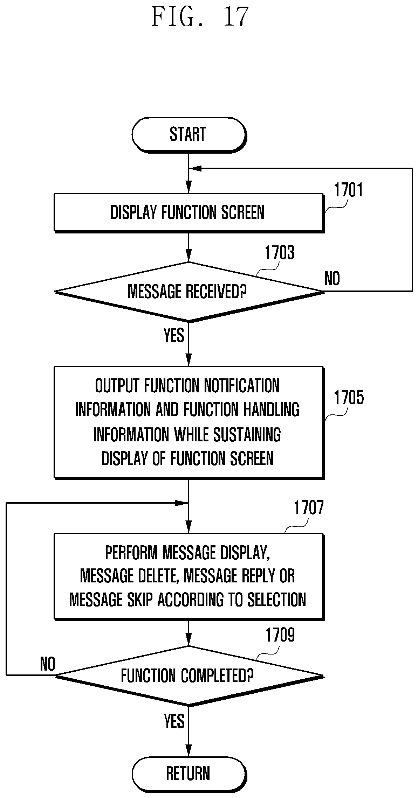

FIG. 17 is a flowchart of a procedure for information handling according to the sixth embodiment of the present disclosure.

Referring to FIG. 17, at operation 1701, in response to a user request for an application, the control unit 160 activates the requested application and outputs an application function screen 42 on the display unit 140. Thereafter, at operation 1703, the control unit 160 determines whether a message is received. If a message is not received, the control unit 160 returns to operation 1701. If a message is received at operation 1703, the control unit 160 proceeds to operation 1705 at which the control unit 160 outputs function notification information 30 and function handling information 91, 92, 93 and 94 on the display unit 140 while sustaining display of the application function screen 42. Here, the function notification information 30 may be a message reception notification, and the function handling information 91, 92, 93 and 94 may be message handling guide information.

At operation 1707, the control unit 160 performs one of message read, message delete, message reply and message skip according to selection of the function handling information.

Thereafter, at operation 1709, the control unit 160 determines whether function processing related to message reception has been completed. If function processing has not been completed, the control unit 160 returns to operation 1707 and continues message function processing. If function processing is completed, the control unit 160 returns to operation 1701 and continues display of the application function screen 42.

Additionally, in the event that a text or instant message is received, when function handling information indicating "read" is selected, the control unit 160 may find a record of messages exchanged with the sender of the received message. If such a message exchange record is present, the control unit 160 may output the newly received message together with at least one previous message.

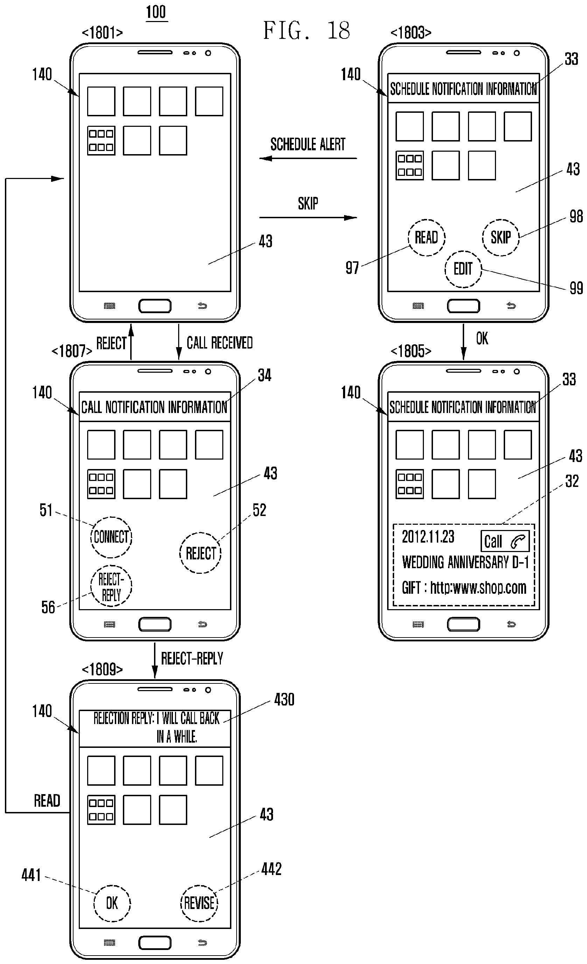

FIG. 18 illustrates screen representations of information handling according to a seventh embodiment of the present disclosure.

Referring to FIG. 18, in response to a user manipulation, the control unit 160 of the mobile terminal 100 supporting the information handling function of the present disclosure may output a menu icon screen 43 having menu icons (such as a base screen or idle screen) on the display unit 140 as indicated by indicia 1801. Thereafter, when a schedule alert is generated, the control unit 160 may output schedule notification information 33 and pieces of function handling information 97, 98 and 99 for schedule function handling on the display unit 140 as indicated by indicia 1803. Here, the control unit 160 may output the function handling information 97, 98 and 99 as an overlay on the menu icon screen 43. The control unit 160 may output the schedule notification information 33 as an overlay on the menu icon screen 43, or may resize the menu icon screen 43 to arrange a space (for example, an upper region of the display unit 140) and output the schedule notification information 33 in the arranged space.

In a state indicated by indicia 1803, if function handling information 97 "Read" is selected, the control unit 160 may output detailed schedule notification information 32 (a detailed version of the schedule notification information 33) on the display unit 140 as indicated by indicia 1805. Here, the detailed schedule notification information 32 may have a certain level of transparency on the menu icon screen 43. If function handling information 98 "Skip" is selected, the control unit 160 may return to a state indicated by indicia 1801. If function handling information 99 "Edit" is selected, the control unit 160 may output a schedule edit screen on the display unit 140. Here, the schedule edit screen may be output in a similar way to the message composition screen described in FIG. 16. Alternatively, the control unit 160 may perform page transition to the schedule edit screen with the menu icon screen 43 hidden.

In a state indicated by indicia 1801, when a call is received, the control unit 160 may output call notification information 34 and pieces of function handling information 51, 52 and 56 for call handling on the menu icon screen 43 as indicated by indicia 1807. If function handling information 52 "Reject" is selected, the control unit 160 may return to a state indicated by indicia 1801. If function handling information 51 "Connect" is selected, the control unit 160 may perform call connection establishment. Here, the control unit 160 may update the call notification information 34 so as to indicate a call connected state while sustaining display of the menu icon screen 43 on the display unit 140.

In a state indicated by indicia 1807, if function handling information 56 "Reject-Reply" is selected, as indicated by indicia 1809, the control unit 160 may display a pre-written reply message in a reply region 430 and output additional function handling information 441 and 442 for determining whether to send the message written in the reply region 430 at portions of the menu icon screen 43. If additional function handling information 441 "OK" is selected, the control unit 160 may send the reply message written in the reply region 430 to an external mobile terminal and return to a state indicated by indicia 1801. If additional function handling information 442 "Revise" is selected, the control unit 160 may output revision regions for amending the reply message on the menu icon screen 43.

The control unit 160 may further output additional function handling information "Reply Cancel". If this additional function handling information is selected, the control unit 160 may return to a state indicated by indicia 1801 without transmission of a reply message.

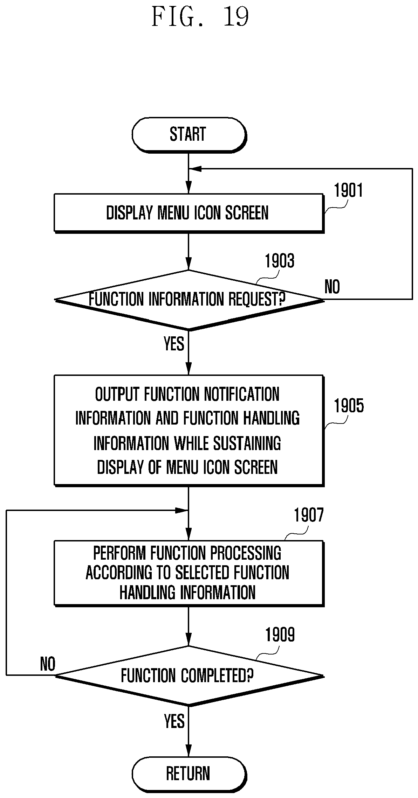

FIG. 19 is a flowchart of a procedure for information handling according to the seventh embodiment of the present disclosure.

Referring to FIG. 19, in the information handling method, at operation 1901, the control unit 160 outputs a menu icon screen 43 as a base screen on the display unit 140 in response to a user manipulation. At operation 1903, the control unit 160 determines whether a function information request such as reception of a message, reception of a call and generation of a schedule alert is issued. If a function information request is not generated, the control unit 160 may return to a state indicated by indicia 1201.

If a function information request is generated at operation 1903, the control unit 160 proceeds to operation 1905 at which the control unit 160 outputs function notification information 33 and 34 and function handling information while sustaining display of the menu icon screen 43. That is, the control unit 160 may output function notification information indicating reception of a message, reception of a call or generation of a schedule alert on the display unit 140 according to generation of an event, and output function handling information for handling a message, a call, or a schedule alert on the display unit 140.

At operation 1907, the control unit 160 performs a function according to the function handling information selected by the user or by default. For example, the control unit 160 may accept the call, reject the call, transmit a pre-written rejection message, display the message, display schedule information, or the like.

Thereafter, at operation 1909, the control unit 160 determines whether an event for function processing completion is detected. If such an event is not detected or function processing is not completed, the control unit 160 returns to operation 1907 and continues function processing. If such an event is detected, the control unit 160 returns to operation 1901.

The above embodiments may be separately carried out or may be carried out in combination. It should be understood by those skilled in the art that each embodiment may be carried out with some components modified or reorganized.

As described above, the information handling method of the present disclosure enables the mobile terminal 100 executing a first function to output function notification information related to a second function on a function screen of the first function currently being executed. Hence, in a multitasking environment, occurrence of an event may be intuitively identified and continuity of task processing may be secured. In addition, to process functions related to the function notification information, at least one of function handling information or function handling guide information indicating generation of input events for function handling is output, so that the user may easily control function processing.

The mobile terminal may further include various components according to design. For example, when the mobile terminal is a communication terminal, the mobile terminal may further include a local area communication module for local area communication, a data communication interface based on wired and wireless communication, an Internet communication module for Internet access and communication, and a digital broadcast reception module for receiving and playing digital broadcasts. Although possible variations according to the trend of digital convergence are too numerous to enumerate, it should be apparent to those skilled in the art that the mobile terminal may further include a unit comparable to the above-described units, and one unit of the mobile terminal may be removed or replaced with another unit.

The mobile terminal of the present disclosure may be any information and communication appliance or multimedia appliance, such as a mobile communication terminal based on communication protocols supporting various communication systems, a Portable Multimedia Player (PMP), a digital broadcast receiver, a Personal Digital Assistant (PDA), a music player like an MP3 player, a portable game console, a smart phone, a laptop computer, a tablet computer, or a handheld computer.

The method of the present disclosure may be implemented as a program. It is widely known to those skilled in the art that a program may be realized using software, hardware, or a combination thereof. A program implementing the method of the present disclosure may be stored in a storage medium, and may also be downloaded from a server or computer to a mobile terminal through a communication network.

While the present disclosure has been shown and described with reference to various embodiments thereof, it will be understood by those skilled in the art that various changes in form and details may be made therein without departing from the scope of the present disclosure as defined by the appended claims and their equivalents.

## Claims

1. A method for information handling in a mobile terminal (100) comprising a display unit (140) including a touch screen, the method comprising:
displaying an operation of an application in a first display area of the touch screen;
detecting at least one touch input associated with the operation of the application in the first display area;
receiving an incoming call while displaying the operation of the application;
determining at least one touch input region of the first display area that is associated with the operation of the application based on the at least one touch input, the at least one touch input being detected on any location on the first display area of the touch screen before receiving the incoming call;
rendering an image of a user interface on the touch screen in response to the incoming call, the image of the user interface being superimposed over at least one portion of the first display area that is outside of the determined at least one touch input region; and
receiving a user input on the user interface to respond to the incoming call.

2. The method of claim 1, wherein the touch screen is configured to display the operation of the application not associated with the incoming call in the first display area before receiving the incoming call, and to continue to display the operation after receiving the user input.

3. The method of claim 2, wherein the image of the user interface can be rendered with a predetermined size or at a location on the touch screen such that viewing experience of a user with respect to the displayed operation in the first display area can be maintained.

4. The method of claim 2, wherein the respond to the incoming call comprises an answer or rejection of the call, and the respond can be executed without interfering the operation of the application.

5. The method of claim 1, further comprising at least one of:
pausing output of an audio signal related to the operation of the application in the first display area; and
resuming, when processing of the incoming call is ended, output of the audio signal related to the operation of the application.

6. The method of claim 1, wherein the rendering the image of the user interface comprises:
resizing the displayed operation to arrange a separate space; and
outputting a notification information of the incoming call in the arranged space and rendering the image of the user interface as an overlay on the resized operation.

7. The method of claim 1, further comprising outputting guide information guiding generation of an input event to deal with processing function related to the incoming call.

8. A mobile terminal (100) supporting information handling, the mobile terminal comprising:
a display unit (140) including a touch screen configured to display an operation of an application in a first display area; and
a control unit (160) configured to:
detect at least one touch input associated with the operation of the application in the first display area,
receive an incoming call while displaying the operation of the application,
determine at least one touch input region of the first display area that is associated with the operation of the application based on the at least one touch input, the at least one touch input being detected on any location on the first display area of the touch screen before receiving the incoming call,
render an image of a user interface on the display unit in response to the incoming call, the image of the user interface being superimposed over at least one portion of the first display area that is outside of the determined at least one touch input region, and
receive a user input on the user interface to respond to the incoming call.

9. The mobile terminal of claim 8, wherein the display unit is further configured to display the operation of the application not associated with the incoming call in the first display area before receiving the incoming call, and to continue to display the operation after receiving the user input.

10. The mobile terminal of claim 9, wherein the image of the user interface can be rendered with a predetermined size or at a location on the display unit such that viewing experience of a user with respect to the displayed operation in the first display area can be maintained.

11. The mobile terminal of claim 9, wherein the respond to the incoming call comprises an answer or rejection of the call, and the respond can be executed without interfering the operation of the application.

12. The mobile terminal of claim 8, further comprising an audio processing unit configured to pause output of an audio signal related to the operation of the application in the first display area, and configured to resume output of the audio signal related to the operation of the application when processing of the incoming call is ended.

13. The mobile terminal of claim 8, wherein the control unit is further configured to control a process of rendering, after receiving the user input, additional user interface for further function processing.

14. The mobile terminal of claim 8, wherein the display unit is further configured to output guide information guiding generation of an input event to deal with processing function related to the incoming call.

15. The mobile terminal of claim 14, wherein the display unit is further configured to output at least one of guide information based on button keys to guide generation of input events for function processing according to selection of button keys of the mobile terminal, guide information based on touch gestures to guide generation of input events for function processing according to generation of touch gestures on the display unit supporting a touch feature, guide information based on touch gestures to guide generation of input events for function processing according to generation of touch gestures in a pre-designated region on the display unit supporting a touch feature, guide information based on touch gestures to guide generation of input events for function processing using the user interface, guide information based on motion or proximity to guide generation of input events using a sensor unit of the mobile terminal, and guide information based on speech recognition to guide generation of input events for function processing through speech recognition.

## Patentansprüche

1. Verfahren zur Informationsverarbeitung in einem mobilen Endgerät (100), umfassend eine Anzeigeeinheit (140), enthaltend einen Berührungsbildschirm, das Verfahren umfassend:
Anzeigen eines Betriebs einer Anwendung in einem ersten Anzeigebereich des Berührungsbildschirms;
Erfassen zumindest einer Berührungseingabe, die dem Betrieb der Anwendung im ersten Anzeigebereich zugehörig ist;
Empfangen eines eingehenden Anrufs, während der Betrieb der Anwendung angezeigt wird;
Ermitteln zumindest einer Berührungseingaberegion des ersten Anzeigebereichs, die dem Betrieb der Anwendung zugehörig ist, basierend auf der zumindest einen Berührungseingabe, wobei die zumindest eine Berührungseingabe an irgendeiner Stelle auf dem ersten Anzeigebereich des Berührungsbildschirms erfasst wird, bevor der eingehende Anruf empfangen wird;
Wiedergeben eines Bilds einer Anwenderschnittstelle auf dem Berührungsbildschirm in Antwort auf den eingehenden Anruf, wobei das Bild der Anwenderschnittstelle über zumindest einen Abschnitt des ersten Anzeigebereichs, der außerhalb der ermittelten zumindest einen Berührungseingaberegion liegt, überlagert ist; und
Empfangen einer Anwendereingabe auf der Anwenderschnittstelle, um auf den eingehenden Anruf zu antworten.

2. Verfahren nach Anspruch 1, wobei der Berührungsbildschirm konfiguriert ist, den Betrieb der Anwendung, die nicht dem eingehenden Anruf zugehörig ist, im ersten Anzeigebereich anzuzeigen, bevor der eingehende Anruf empfangen wird, und den Betrieb nach Empfang der Anwendereingabe weiterhin anzuzeigen.

3. Verfahren nach Anspruch 2, wobei das Bild der Anwenderschnittstelle mit einer vorbestimmten Größe oder bei einer Stelle auf dem Berührungsbildschirm wiedergegeben werden kann, sodass ein Bilderlebnis eines Anwenders in Bezug auf den angezeigten Betrieb im ersten Anzeigebereich beibehalten werden kann.

4. Verfahren nach Anspruch 2, wobei die Antwort auf den eingehenden Anruf eine Annahme oder Ablehnung des Anrufs umfasst, und die Antwort ohne den Betrieb der Anwendung zu stören durchgeführt werden kann.

5. Verfahren nach Anspruch 1, ferner umfassend zumindest eines von:
Pausieren einer Ausgabe eines Audiosignals, das sich auf den Betrieb der Anwendung im ersten Anzeigebereich bezieht; und
Wiederaufnehmen, wenn ein Verarbeiten des eingehenden Anrufs beendet ist, einer Ausgabe des Audiosignals, das sich auf den Betrieb der Anwendung bezieht.

6. Verfahren nach Anspruch 1, wobei das Wiedergeben des Bilds der Anwenderschnittstelle umfasst:
Ändern der Größe des angezeigten Betriebs, um einen separaten Raum anzuordnen; und
Ausgeben einer Benachrichtigungsinformation des eingehenden Anrufs im angeordneten Raum und Wiedergeben des Bilds der Anwenderschnittstelle als eine Einblendung auf dem größengeänderten Betrieb.

7. Verfahren nach Anspruch 1, ferner umfassend ein Ausgeben von Leitinformationen, die eine Erzeugung eines Eingabeereignisses leiten, um eine Verarbeitungsfunktion vorzunehmen, die sich auf den eingehenden Anruf bezieht.

8. Mobiles Endgerät (100), das eine Informationsverarbeitung unterstützt, das mobile Endgerät umfassend:
eine Anzeigeeinheit (140), die einen Berührungsbildschirm enthält, der konfiguriert ist, einen Betrieb einer Anwendung in einem ersten Anzeigebereich anzuzeigen; und
eine Steuereinheit (160), die konfiguriert ist zum:
Erfassen zumindest einer Berührungseingabe, die dem Betrieb der Anwendung im ersten Anzeigebereich zugehörig ist,
Empfangen eines eingehenden Anrufs, während der Betrieb der Anwendung angezeigt wird;
Ermitteln zumindest einer Berührungseingaberegion des ersten Anzeigebereichs, die dem Betrieb der Anwendung zugehörig ist, basierend auf der zumindest einen Berührungseingabe, wobei die zumindest eine Berührungseingabe an irgendeiner Stelle auf dem ersten Anzeigebereich des Berührungsbildschirms erfasst wird, bevor der eingehende Anruf empfangen wird;
Wiedergeben eines Bilds einer Anwenderschnittstelle auf dem Berührungsbildschirm in Antwort auf den eingehenden Anruf, wobei das Bild der Anwenderschnittstelle über zumindest einen Abschnitt des ersten Anzeigebereichs, der außerhalb des ermittelten zumindest einen Berührungseingaberegion ist, überlagert ist; und
Empfangen einer Anwendereingabe auf der Anwenderschnittstelle, um auf den eingehenden Anruf zu antworten.

9. Mobiles Endgerät nach Anspruch 8, wobei die Anzeigeeinheit ferner konfiguriert ist, den Betrieb der Anwendung, die nicht dem eingehenden Anruf zugehörig ist, im ersten Anzeigebereich anzuzeigen, bevor der eingehende Anruf empfangen wird, und den Betrieb nach Empfang der Anwendereingabe weiterhin anzuzeigen.

10. Mobiles Endgerät nach Anspruch 9, wobei das Bild der Anwenderschnittstelle mit einer vorbestimmten Größe oder bei einer Stelle auf dem Berührungsbildschirm wiedergegeben werden kann, sodass ein Bilderlebnis eines Anwenders in Bezug auf den angezeigten Betrieb im ersten Anzeigebereich beibehalten werden kann.

11. Mobiles Endgerät nach Anspruch 9, wobei die Antwort auf den eingehenden Anruf eine Annahme oder Ablehnung des Anrufs umfasst, und die Antwort ohne den Betrieb der Anwendung zu stören durchgeführt werden kann.

12. Mobiles Endgerät nach Anspruch 8, ferner umfassend eine Audioverarbeitungseinheit, die konfiguriert ist, eine Ausgabe eines Audiosignals, das sich auf den Betrieb der Anwendung im ersten Anzeigebereich bezieht, zu pausieren, und konfiguriert ist, eine Ausgabe des Audiosignals, das sich auf den Betrieb der Anwendung bezieht, wieder aufzunehmen, wenn ein Verarbeiten des eingehenden Anrufs beendet ist.

13. Mobiles Endgerät nach Anspruch 8, wobei die Steuereinheit ferner konfiguriert ist, einen Prozess zum Wiedergeben, nachdem die Anwendereingabe empfangen wurde, einer zusätzlichen Anwenderschnittstelle für eine weitere Funktionsverarbeitung zu steuern.

14. Mobiles Endgerät nach Anspruch 8, wobei die Anzeigeeinheit ferner konfiguriert ist, Leitinformationen, die eine Erzeugung eines Eingabeereignisses leiten, um eine Verarbeitungsfunktion vorzunehmen, die sich auf den eingehenden Anruf bezieht, auszugeben.

15. Mobiles Endgerät nach Anspruch 14, wobei die Anzeigeeinheit ferner konfiguriert ist, zumindest eines von Leitinformationen, basierend auf Knopftasten, um eine Erzeugung von Eingabeereignissen zur Funktionsverarbeitung gemäß einer Auswahl von Knopftasten des mobilen Endgeräts zu leiten, Leitinformationen, basierend auf Berührungsgesten, um eine Erzeugung von Eingabeereignissen zur Funktionsverarbeitung gemäß einer Erzeugung von Berührungsgesten auf der Anzeigeeinheit, die ein Berührungsmerkmal unterstützt, zu leiten, Leitinformationen, basierend auf Berührungsgesten, um eine Erzeugung von Eingabeereignissen zur Funktionsverarbeitung gemäß einer Erzeugung von Berührungsgesten in einer vorab zugewiesenen Region auf der Anzeigeeinheit, die eine Berührungsfunktion unterstützt, zu leiten, Leitinformationen, basierend auf Berührungsgesten, um eine Erzeugung von Eingabeereignissen zur Funktionsverarbeitung unter Verwendung der Anwenderschnittstelle zu leiten, Leitinformationen, basierend auf einer Bewegung oder Nähe, um eine Erzeugung von Eingabeereignissen unter Verwendung einer Sensoreinheit des mobilen Endgeräts zu leiten, und Leitinformationen, basierend auf einer Spracherkennung, um eine Erzeugung von Eingabeereignissen zur Funktionsverarbeitung durch Spracherkennung zu leiten, auszugeben.

## Revendications

1. Procédé de gestion d'informations dans un terminal mobile (100) comprenant une unité d'affichage (140) comprenant un écran tactile, le procédé comprenant :
l'affichage d'une opération d'une application dans une première zone d'affichage de l'écran tactile ;
la détection d'au moins une entrée tactile associée à l'opération de l'application dans la première zone d'affichage ;
la réception d'un appel entrant pendant l'affichage de l'opération de l'application ;
la détermination d'au moins une région d'entrée tactile de la première zone d'affichage qui est associée à l'opération de l'application sur la base de l'au moins une entrée tactile, l'au moins une entrée tactile étant détectée à n'importe quel emplacement sur la première zone d'affichage de l'écran tactile avant la réception de l'appel entrant ;
le rendu d'une image d'une interface utilisateur sur l'écran tactile en réponse à l'appel entrant, l'image de l'interface utilisateur étant superposée sur au moins une portion de la première zone d'affichage qui est à l'extérieur de l'au moins une région d'entrée tactile déterminée ; et
la réception d'une entrée d'utilisateur sur l'interface utilisateur pour répondre à l'appel entrant.

2. Procédé selon la revendication 1, dans lequel l'écran tactile est configuré pour afficher l'opération de l'application non associée à l'appel entrant dans la première zone d'affichage avant la réception de l'appel entrant, et continuer à afficher l'opération après la réception de l'entrée d'utilisateur.

3. Procédé selon la revendication 2, dans lequel l'image de l'interface utilisateur peut être rendue avec une taille prédéterminée ou à un emplacement sur l'écran tactile de manière à maintenir la satisfaction de visualisation d'un utilisateur en ce qui concerne l'opération affichée dans la première zone d'affichage.

4. Procédé selon la revendication 2, dans lequel la réponse à l'appel entrant comprend une acceptation ou un refus de l'appel, et la réponse peut être exécutée sans interférer avec l'opération de l'application.

5. Procédé selon la revendication 1, comprenant en outre au moins l'un de :
la pause de la délivrance d'un signal audio relatif à l'opération de l'application dans la première zone d'affichage ; et
la reprise, à la fin du traitement de l'appel entrant, de la délivrance du signal audio relatif à l'opération de l'application.

6. Procédé selon la revendication 1, dans lequel le rendu de l'image de l'interface utilisateur comprend :
le redimensionnement de l'opération affichée pour agencer un espace distinct ; et
la délivrance d'informations de notification de l'appel entrant dans l'espace agencé et le rendu de l'image de l'interface utilisateur en tant qu'une superposition sur l'opération redimensionnée.

7. Procédé selon la revendication 1, comprenant en outre la délivrance d'informations de guidage guidant la génération d'un événement d'entrée pour gérer une fonction de traitement relative à l'appel entrant.

8. Terminal mobile (100) prenant en charge une gestion d'informations, le terminal mobile comprenant :
une unité d'affichage (140) comprenant un écran tactile configuré pour effectuer l'affichage d'une opération d'une application dans une première zone d'affichage ; et
une unité de commande (160) configurée pour effectuer :
la détection d'au moins une entrée tactile associée à l'opération de l'application dans la première zone d'affichage,
la réception d'un appel entrant pendant l'affichage de l'opération de l'application,
la détermination d'au moins une région d'entrée tactile de la première zone d'affichage qui est associée à l'opération de l'application sur la base de l'au moins une entrée tactile, l'au moins une entrée tactile étant détectée à n'importe quel emplacement sur la première zone d'affichage de l'écran tactile avant la réception de l'appel entrant,
le rendu d'une image d'une interface utilisateur sur l'unité d'affichage en réponse à l'appel entrant, l'image de l'interface utilisateur étant superposée sur au moins une portion de la première zone d'affichage qui est à l'extérieur de l'au moins une région d'entrée tactile déterminée, et
la réception d'une entrée d'utilisateur sur l'interface utilisateur pour répondre à l'appel entrant.

9. Terminal mobile selon la revendication 8, dans lequel l'unité d'affichage est en outre configurée pour afficher l'opération de l'application non associée à l'appel entrant dans la première zone d'affichage avant la réception de l'appel entrant, et continuer à afficher l'opération après la réception de l'entrée d'utilisateur.

10. Terminal mobile selon la revendication 9, dans lequel l'image de l'interface utilisateur peut être rendue avec une taille prédéterminée ou à un emplacement sur l'unité d'affichage de manière à maintenir la satisfaction de visualisation d'un utilisateur en ce qui concerne l'opération affichée dans la première zone d'affichage.

11. Terminal mobile selon la revendication 9, dans lequel la réponse à l'appel entrant comprend une acceptation ou un refus de l'appel, et la réponse peut être exécutée sans interférer avec l'opération de l'application.

12. Terminal mobile selon la revendication 8, comprenant en outre une unité de traitement audio configurée pour effectuer la pause de la délivrance d'un signal audio relatif à l'opération de l'application dans la première zone d'affichage, et configurée pour effectuer la reprise de la délivrance du signal audio relatif à l'opération de l'application à la fin du traitement de l'appel entrant.

13. Terminal mobile selon la revendication 8, dans lequel l'unité de commande est en outre configurée pour commander un processus de rendu, après la réception de l'entrée d'utilisateur, d'une interface utilisateur supplémentaire pour un traitement de fonction supplémentaire.

14. Terminal mobile selon la revendication 8, dans lequel l'unité d'affichage est en outre configurée pour effectuer la délivrance d'informations de guidage guidant la génération d'un événement d'entrée pour gérer une fonction de traitement relative à l'appel entrant.

15. Terminal mobile selon la revendication 14, dans lequel l'unité d'affichage est en outre configurée pour effectuer la délivrance d'au moins l'une d'informations de guidage sur la base de touches de bouton pour guider la génération d'événements d'entrée pour un traitement de fonction en fonction d'une sélection de touches de bouton du terminal mobile, d'informations de guidage sur la base de gestes tactiles pour guider la génération d'événements d'entrée pour un traitement de fonction en fonction de la génération de gestes tactiles sur l'unité d'affichage prenant en charge une caractéristique tactile, d'informations de guidage sur la base de gestes tactiles pour guider la génération d'événements d'entrée pour un traitement de fonction en fonction de la génération de gestes tactiles dans une région préalablement désignée sur l'unité d'affichage prenant en charge une caractéristique tactile, d'informations de guidage sur la base de gestes tactiles pour guider la génération d'événements d'entrée pour un traitement de fonction en utilisant l'interface utilisateur, d'informations de guidage sur la base d'un mouvement ou d'une proximité pour guider la génération d'événements d'entrée en utilisant une unité détectrice du terminal mobile, et d'informations de guidage sur la base d'une reconnaissance vocale pour guider la génération d'événements d'entrée pour un traitement de fonction par l'intermédiaire d'une reconnaissance vocale.
